# EUROPÄISCHE PATENTANMELDUNG

(11) **EP 4 715 520 A1**
(43) Veröffentlichungstag der Anmeldung: **25.03.2026**
(21) Anmeldenummer: 25203142.2
(22) Anmeldetag: 18.09.2025
(51) Int. Cl.: G06F 1/187

(54) **AUFNAHMEEINRICHTUNG FÜR EINE BAUEINHEIT UND COMPUTEREINRICHTUNG**

(30) Priorität: 18.09.2024 DE 102024003004
(71) Anmelder: FAST LTA GmbH, 80686 München (DE)
(72) Erfinder: BAUERNFEIND, Markus, 82239 Alling (DE); PESCHKE, Christian, 82110 Germering (DE); MADER, Sven, 82131 Gauting (DE)
(74) Vertreter: Verscht, Thomas Kurt Albert

(57) **Zusammenfassung**

Die Erfindung betrifft eine Baueinheit zur Aufnahme von einer Vielzahl von Erweiterungskarten, wobei zum Halten von jeder der Erweiterungskarten eine jeweilige Trägereinrichtung vorgesehen ist. Ferner betrifft die Erfindung eine Aufnahmeeinrichtung für wenigstens eine Baueinheit, wobei die Aufnahmeeinrichtung wenigstens eine Aufnahmeöffnung für die wenigstens eine Baueinheit aufweist, wobei die Aufnahmeeinrichtung wenigstens eine Auswurfeinrichtung für die wenigstens eine Baueinheit aufweist, wobei die Auswurfeinrichtung einen Linearmotor aufweist, an welchem ein Stempel angebracht ist, der die Baueinheit durch eine Bewegung des Stempels beginnend ab einer ersten Hubposition des Linearmotors, welche einem Kontakt des Stempels mit der Baueinheit entspricht, bis zu einer zweiten Hubposition des Linearmotors, welche einer Auswurfposition der Baueinheit entspricht, auswirft. Ferner betrifft die Erfindung eine Computereinrichtung mit einer derartigen Baueinheit und einer derartigen Aufnahmeeinrichtung. Ferner betrifft die Erfindung ein Verfahren zur 2-Faktor-Authentifizierung eines Schreib-/Lesezugriffs auf ein RAID-System. Schließlich betrifft die Erfindung ein Verfahren zur Realisierung einer Fähigkeit eines Einsteckens eines NVMe-SSD-Moduls im laufenden Betrieb, wobei das Verfahren folgende Schritte aufweist: (a) Erkennen eines eingesetzten NVMe-SSD-Moduls an einer an einem Massen-Pin davon anliegenden Spannung; (b) Einschalten der Versorgungsspannung und Anlegen derselben an den Versorgungsspannungs-Pin des NVMe-SSD-Moduls nach einer ersten vorbestimmten Zeitperiode nach Schritt (a); und (c) Ansteuern des PERST-Pins des NVMe-SSD-Moduls mit einem Rücksetzsignal nach einer zweiten vorbestimmten Zeitperiode nach Schritt (b).

## Beschreibung

Gemäß einem ersten Aspekt betrifft die vorliegende Erfindung eine Baueinheit. Gemäß einem zweiten Aspekt betrifft die vorliegende Erfindung eine Aufnahmeeinrichtung für eine derartige Baueinheit. Gemäß einem dritten Aspekt betrifft die vorliegende Erfindung eine Computereinrichtung. Gemäß einem vierten Aspekt betrifft die vorliegende Erfindung ein Verfahren zur 2-Faktor-Authentifizierung eines Schreib/Lesezugriffs auf ein RAID-System. Gemäß einem fünften Aspekt betrifft die vorliegende Erfindung ein Verfahren zur Realisierung einer Fähigkeit eines Einsteckens eines NVMe-SSD-Moduls im laufenden Betrieb.

Im Stand der Technik sind Speichervorrichtungen bekannt. Für die Speicherung von Sicherungskopien oder auch zur Langzeitdatenspeicherung wird vorteilhafterweise ein Festplatten-Speicherverbund, beispielsweise nach Art eines RAID-Systems verwendet.

Ein RAID-System dient zur Organisation mehrerer physischer Massenspeicher (üblicherweise Festplattenlaufwerke oder SSDs, siehe unten) zu einem logischen Laufwerk, das eine höhere Ausfallsicherheit oder einen größeren Datendurchsatz erlaubt als ein einzelnes physisches Speichermedium. Während die meisten in Computern verwendeten Techniken und Anwendungen darauf abzielen, Redundanzen (in Form von mehrfachem Vorkommen derselben Daten) zu vermeiden, werden bei RAID-Systemen redundante Informationen gezielt erzeugt, damit beim Ausfall einzelner Speichermedien das RAID-System als Ganzes seine Integrität und Funktionalität behält und nach Ersetzen der ausgefallenen Komponente durch eine Wiederherstellungsroutine der ursprüngliche Zustand wiederhergestellt werden kann. In einem RAID-System wird dabei eine Datei auf mehrere Speichermedien codiert und verteilt gespeichert. Es findet dabei insbesondere eine kalte, d.h. stromlose, Datenspeicherung statt. Lediglich in bestimmten Zeitabständen findet eine Integritätsprüfung der gespeicherten Daten statt. Falls Fehler auftreten sollten, werden diese repariert. Ein defektes Speichermedium kann einfach ausgewechselt werden, da bei Einsetzen desselben, dieses sozusagen als defekt erkannt und wieder repariert wird.

Zur Speicherung von Daten werden Festplatten zunehmend durch Halbleiterspeichermodule, sogenannte SSDs, ersetzt. Ein SSD, seltener auch Halbleiterlaufwerk oder Festkörperspeicher genannt, ist ein nichtflüchtiger Datenspeicher der Computertechnik. Weil die SSD u. a. in PCs großteils klassische Festplatten ersetzte, wird sie manchmal auch als SSD-"Festplatte" bezeichnet. Die Bauform und die elektrischen Anschlüsse können den Normen für Laufwerke mit magnetischen oder optischen Speicherplatten entsprechen, müssen dies aber nicht. Sie können zum Beispiel auch als PCIe-Steckkane ausgeführt sein.

NVM Express (kurz NVMe) ist ein im Jahr 2011 veröffentlichtes Softwareprotokoll, um SSDs über die physische Schnittstelle PCI Express zu verbinden, ohne dass dafür herstellerspezifische Treiber nötig sind. NVMe soll besonders bei parallelen Zugriffen, wie sie bei Multithreading häufig vorkommen, die Geschwindigkeit erhöhen, indem die Latenz und die Verwaltungsdaten durch die Befehle verringert werden. Über die Anwendung für Erweiterungs-Steckplätze hinaus bilden die PCIe-Protokolle inzwischen die Basis für zahlreiche andere Schnittstellen beispielsweise M.2.

M.2 ist eine Spezifikation für interne Computer-Erweiterungskarten und entsprechende Ports. Aufgrund der kleineren und flexibleren Abmessungen in Verbindung mit erweiterten Funktionen ist M.2 besser für den Anschluss von SSDs geeignet - insbesondere in kompakten Geräten wie Ultrabooks oder Tablets. Vom M.2-Standard wird insbesondere das PCI Express-Bussystem unterstützt.

Durch den Übergang von Festplatten zu SSDs gibt es daher einen großen Bedarf für Lösungen wie derartige Speicherverbundsystem mit SSDs in baulicher Hinsicht, d.h. insbesondere unter mechanischen und elektrischen Aspekten, realisiert werden können.

Der Erfindung liegt daher die Aufgabe zugrunde, die Nachteile des Standes der Technik zu vermeiden, und insbesondere der eingangs genannten Art derart weiterzubilden, dass eine sichere, platzsparende und bedienungsfreundliche Speicherung von Daten ermöglicht wird.

Die der Erfindung zugrundeliegende Aufgabe wird gemäß dem ersten Aspekt der vorliegenden Erfindung durch eine Baueinheit zur Aufnahme und Anschluss von einer Vielzahl von Erweiterungskarten, wobei zum Halten von jeder der Erweiterungskarten eine jeweilige Trägereinrichtung vorgesehen ist, gelöst.

Dabei ist bevorzugt, dass die Trägereinrichtung als Lichtleiter ausgebildet ist. Hierzu sei bemerkt, dass ein Einstecken der Trägereinrichtung grundsätzlich von vorne erfolgt, und zwar in eine hinten angeordnete Elektronik. Hinten können also beispielsweise LED's einfach angschlossen werden, während vorderseitig kein Platz für Anzeigen und dergleichen verfügbar ist. Die Erfindung macht es daher möglich, Lichtsignale sozusagen von hinten nach vorne durchzuleiten. Die Trägereinrichtung ist dabei aus einem transparenten, insbesondere farblosen, Plastik bzw. Kunststoff hergestellt. Dabei weist bevorzugt die Baueinheit für jede der Vielzahl von Erweiterungskarten eine jeweilige Leuchtdiode auf, wobei die Leuchtdiode vorzugsweise zur Anzeige eines Betriebszustands der Erweiterungskarte vorgesehen ist.

Vorzugsweise ist ein Ende der Trägereinrichtung im eingesteckten Zustand der Erweiterungskarte benachbart der Leuchtdiode angeordnet ist. Dies ist im Allgemeinen ein zu einem Haltegriff gegenüberliegendes Ende.

Ferner ist bevorzugt, dass zur Einkopplung des Lichts der Leuchtdiode in die Trägereinrichtung die Trägereinrichtung an einem Bereich einer der Leuchtdiode abgewandten Seite mit einer abgeschrägten Fläche versehen ist, und dass zur Einkopplung des Lichts der Leuchtdiode in die Trägereinrichtung die Trägereinrichtung an einem Bereich der der Leuchtdiode zugewandten Seite mit einer planen Fläche versehen ist, welche senkrecht zu der Leuchtdiode angeordnet ist. Die abgeschrägte Fläche, welche vorzugsweise nach außen unten abgeschrägt ist, ist zu der planen bzw. ebenen Fläche unter einem Winkel von etwa 45 Grad ausgebildet. Um eine bessere Einkopplung des Lichts in die Trägereinrichtung zu erreichen, kann zwischen Leuchtdiode und Trägereinrichtung auch eine entsprechende Optik, bspw. in Form einer Sammellinse, vorgesehen sein.

Vorzugsweise tritt im Betrieb von der Leuchtdiode ausgesandtes Licht über die plane Fläche der Trägereinrichtung in diese ein und wird an der abgeschrägten Fläche mittels Totalreflexion in die Trägereinrichtung, vorzugsweise in einer Längsrichtung der Trägereinrichtung, reflektiert. Aufgrund der Ausnutzung der Totalreflexion ist bei dieser Ausführungsform kein Spiegel erforderlich.

In baulicher Hinsicht ist bevorzugt, dass die Trägereinrichtung eines oder mehrere der folgenden Merkmale aufweist:
- einen Haltegriff;
- einen als Rahmen ausgebildeten Grundkörper;
- Materialaussparungen für auf der Erweiterungskarte angeordnete elektronische Bauteile;
- ein erstes Paar von Führungsschienen zum Einsetzen der Erweiterungskarte, wobei die Führungsschienen des ersten Paars von Führungsschienen vorzugsweise an zwei Längsseiten der Trägereinrichtung angeordnet sind;
- ein erstes Paar von Führungsschienen zum Einsetzen der Erweiterungskarte, wobei die Führungsschienen des ersten Paars von Führungsschienen ein unterschiedliches Querschnittsprofil aufweisen;
- ein erstes Paar von Führungsschienen zum Einsetzen der Erweiterungskarte, wobei beide Führungsschienen des ersten Paars von Führungsschienen an einem Ende davon ein abgeflachtes, d.h. insbesondere ein in der Höhe auf die Hälfte reduziertes, Querschnittsprofil aufweisen, wobei vorzugsweise das Ende dem Haltegriff gegenüberliegt; und
- einen Anschlag, bis zu welchem die Erweiterungskarte in die ersten Führungsschienen eingesetzt werden kann.

Desweiteren ist bevorzugt, dass die Baueinheit eines oder mehrere der folgenden aufweist:
- ein im Wesentlichen quaderförmiges Gehäuse;
- eine Vielzahl von zweiten Paaren von Führungsschienen zum jeweiligen Einsetzen der Vielzahl von Trägereinrichtungen, wobei eine Anzahl der Vielzahl der zweiten Paare von Führungsschienen einer Anzahl der Vielzahl der Trägereinrichtungen entspricht;
- eine Vielzahl von zweiten Paaren von Führungsschienen zum jeweiligen Einsetzen der Vielzahl von Trägereinrichtungen, wobei ein Querschnittsprofil eines zweiten Paars von Führungsschienen eine zu einem Querschnittsprofil eines ersten Paars von Führungsschienen entsprechende Gegenprofilierung ist;
- eine jeweilige Buchse zum Anschluss einer Erweiterungskarte;
- zwei Buchsen zum Anschluss einer ersten und einer zweiten Erweiterungskarte, wobei beide Buchsen auf einer Platine angeordnet sind, und zwar in einer Einführrichtung hintereinander, wobei die in Einführrichtung hintere Buchse höher als die in Einführrichtung vordere Buchse derart ausgebildet ist, dass ein Einstecken der Erweiterungskarte in die hintere Buchse über die in Einführrichtung vordere Buchse hinweg ermöglicht wird;
- eine Steuereinrichtung, insbesondere zum Ein- und Ausschalten der Stromversorgung für die Erweiterungskarte, wobei vorzugsweise die Steuereinrichtung eine Authentifizierung eines Anwenders auf Richtigkeit überprüft, und bei positiver Authentifizierung die Stromversorgung für die Erweiterungskarte einschaltet;
- eine Leuchtdiode zur Anzeige eines Betriebszustands der Erweiterungskarte;
- eine abnehmbare Frontplatte mit Lüftungsschlitzen, wobei vorzugsweise die Frontplatte an deren Innenseite einen abgerundeten Bereich aufweist, mit welchen der Strömungsquerschnitt für in die Baueinheit einströmende Luft graduell verkleinert wird;
- eine Rückplatte mit Lüftungsschlitzen;
- eine auf der Unterseite der Baueinheit ausgebildete Materialausnehmung, welche zur Verriegelung der Baueinheit vorgesehen ist, und
- einen NFC-Tag, mit welchem Informationen über die Baueinheit (1), vorzugsweise, in einem stromlosen Zustand der Baueinheit (1), ausgelesen werden können, wobei vorzugsweise die Baueinheit (1) eine Steuereinrichtung zum Beschreiben des NFC-Tags aufweist.

Vorteilhafterweise weist die Baueinheit zwei Arten von Trägereinrichtungen auf, wobei eine Trägereinrichtung der ersten Art kürzer als eine Trägereinrichtung der zweiten Art ausgebildet ist. Dabei kann ferner ein Haltegriff der zwei Arten von Trägereinrichtungen an einer Schmalseite der Trägereinrichtungen ausgebildet sein, wobei der Haltegriff einer Trägereinrichtung der ersten Art an einem Ende der Schmalseite der Trägereinrichtung ausgebildet ist, und wobei der Haltegriff einer Trägereinrichtung der zweiten Art an einem gegenüberliegenden Ende der Schmalseite ausgebildet ist. Dabei kann ferner das Querschnittsprofil der Führungsschienen des ersten Paars von Führungsschienen der Trägereinrichtung der ersten Art verschieden zu dem Querschnittsprofil der Führungsschienen des ersten Paars von Führungsschienen der Trägereinrichtung der zweiten Art ausgebildet sein.

Vorzugsweise weist die Baueinheit wenigstens einen Schacht auf, in welchem die zweiten Paare von Führungsschienen in einer Vertikalrichtung übereinander ausgebildet sind.

Ferner ist bevorzugt, dass die Baueinheit zwei Buchsen zum Anschluss bzw. Einstecken einer ersten und einer zweiten Erweiterungskarte aufweist, wobei beide Buchsen auf einer Seite einer Platine angeordnet sind, und zwar in einer Einführrichtung hintereinander, wobei die in Einführrichtung hintere Buchse höher als die in Einführrichtung vordere Buchse derart ausgebildet ist, dass ein Einstecken der Erweiterungskarte in die hintere Buchse über die in Einführrichtung vordere Buchse hinweg ermöglicht wird.

Gemäß einer baulich besonders kompakten Variante der Erfindung weist die Baueinheit zwei weitere Buchsen zum Anschluss bzw. Einstecken einer dritten und vierten Erweiterungskarte auf, wobei die zwei weiteren Buchsen auf einer der Seite gegenüberliegenden Seite der Platine angeordnet sind, und zwar in der Einführrichtung hintereinander, wobei die in Einführrichtung hintere Buchse der zwei weiteren Buchsen höher als die in Einführrichtung vordere Buchse der zwei weiteren Buchsen derart ausgebildet ist, dass ein Einstecken der Erweiterungskarte in die hintere Buchse über die in Einführrichtung vordere Buchse hinweg ermöglicht wird.

Vorzugsweise sind die Buchsen und die zwei weiteren Buchsen auf der Platine gegenüberliegend angeordnet. Hierdurch ergibt sich nicht nur eine kompakte Anordnung sondern, ein der Kühlung dienender Luftstrom hat wenig Hindernisse und kann die Buchsen ohne große Turbulenzen umströmen. Hierbei ist auch bevorzugt, dass die Platine mittig auf etwa der halben Höhe des Schachts und in Einführrichtung hinter dem Schacht angeordnet ist.

Dabei ist ferner bevorzugt, dass die zwei Buchsen und die zwei weiteren Buchsen derart auf der Platine angeordnet sind, dass die zwei Buchsen und die zwei weiteren Buchsen mittig in einer zu der Vertikalrichtung senkrechten horizontalen Richtung mittig hinter dem Schacht angeordnet sind.

Vorzugsweise sind die zwei Buchsen und die zwei weiteren Buchsen derart auf der Platine angeordnet, dass die in die zwei Buchsen und die zwei weiteren Buchsen einzusteckenden vier Erweiterungskarten im eingesteckten Zustand in einem vorbestimmten Abstand äquidistant voneinander beabstandet sind.

Vorteilhafterweise ist eine obere der vier Erweiterungskarten von der oberen Wand der Baueinheit und ein untere der vier Erweiterungskarten von der unteren Wand um den vorbestimmten Abstand beabstandet.

Vorzugsweise sind die Erweiterungskarten gemäß dem M.2 Standard ausgebildet. Vorteilhafterweise kommunizieren die Erweiterungskarten über das PCIe-Protokoll. Für die bevorzugte Anwendung der vorliegenden Erfindung in Verbindung mit dem Speichern von Daten ist bevorzugt, dass die Erweiterungskarten NVMe-SSD-Module (10) sind.

Die der Erfindung zugrundeliegende Aufgabe wird gemäß dem zweiten Aspekt der vorliegen-den Erfindung durch eine Aufnahmeeinrichtung für wenigstens eine Baueinheit gelöst, wobei die Aufnahmeeinrichtung wenigstens eine Aufnahmeöffnung für die wenigstens eine Baueinheit aufweist, wobei die Aufnahmeeinrichtung wenigstens eine Auswurfeinrichtung für die wenigstens eine Baueinheit aufweist, wobei die Auswurfeinrichtung einen Linearmotor aufweist, an welchem ein Stempel angebracht ist, der die Baueinheit durch eine Bewegung des Stempels beginnend ab einer ersten Hubposition des Linearmotors, welche einem Kontakt des Stempels mit der Baueinheit entspricht, bis zu einer zweiten Hubposition des Linearmotors, welche einer Auswurfposition der Baueinheit entspricht, auswirft. Bei der Erfindung ist daher eine Auswurffunktionalität realisiert wie sie eigentlich nur bei Bandlaufwerken möglich ist.

Vorzugsweise wirkt der Stempel in der zweiten Hubposition als Blockiereinrichtung für die Baueinheit.

Ferner ist bevorzugt, dass die Aufnahmeeinrichtung ferner eine Verriegelungsstange aufweist, wobei der Linearmotor über eine Getriebeeinrichtung mit der Verriegelungsstange verbunden ist, wobei die Getriebeeinrichtung derart ausgebildet ist, dass durch eine Hinbewegung des Linearmotors bzw. des Stempels die Verriegelungsstange um etwa 90 Grad um deren Mittelachse gedreht wird, und wobei durch eine Rückbewegung des Linearmotors bzw. des Stempels die Verriegelungsstange um etwa 90 Grad um deren Mittelachse zurückgedreht wird.

Vorteilhafterweise erfolgt die Drehung der Verriegelungsstange in einem Hubbereich des Linearmotors, der zwischen einer Hubposition des Linearmotors bei eingefahrenem Stempel und der ersten Hubposition ist. Beim Ausschieben bzw. Auswurf der Baueinheit ist daher der Riegel bereits geöffnet. Umgekehrt wird die Baueinheit beim Ein- bzw. Zurückziehen des Stempels automatisch verriegelt.

In einer weiteren Ausführungsform der vorliegenden Erfindung ist bevorzugt, dass die Aufnahmeeinrichtung ferner einen Schlüssel aufweist, welcher auf die Verriegelungsstange aufsteckbar ist, und mit dem die Verriegelungsstange zur Entriegelung manuell gedreht werden kann.

Vorzugsweise weist die Verriegelungsstange einen Riegel auf, welche in eine entsprechende Ausnehmung der Baueinheit eingreift, um die Baueinheit in der Aufnahmeeinrichtung zu verriegeln, und der Riegel die Baueinheit durch die Drehung der Verriegelungsstange bei der Hinbewegung des Linearmotors um etwa 90 Grad entriegelt und durch die Drehung der Verriegelungsstange bei der Rückbewegung des Linearmotors um etwa 90 Grad verriegelt.

Vorzugsweise ist der Riegel an einem Außenumfang der Verriegelungsstange angeordnet und vorzugsweise im wesentlichen senkrecht von dieser absteht.

In konstruktiver Hinsicht ist bevorzugt, dass die Getriebeeinrichtung eine Brücke zu Übertragung der Linearbewegung von dem Stempel auf die Verriegelungsstange aufweist, wobei die Getriebeeinrichtung ferner eine Torsionsfeder, z.B. eine Schenkelfeder, aufweist, wobei an der Verriegelungsstange eine umfangsmäßig angeordnete Nut ausgebildet, in welcher ein Spurzapfen geführt ist, wobei der Spurzapfen durch die Torsionsfeder gegen eine Wand der Nut vorgespannt ist, und wobei die Nut einen im wesentlichen Geraden Abschnitt und einen im wesentlichen schraubenlinienförmig verlaufenden Abschnitt aufweist.

Vorzugsweise wird der Spurzapfen in einem ersten Hubbereich des Linearmotors, der zwischen einer Hubposition des Linearmotors bei eingefahrenem Stempel und der ersten Hubposition liegt, in dem schraubenlinienförmig verlaufenden Abschnitt geführt, und in einem zweiten Hubbereich des Linearmotors, der zwischen der ersten und der zweiten Hubposition liegt, in dem geraden Abschnitt geführt ist.

Ferner ist bevorzugt, dass die Aufnahmeeinrichtung an einem der wenigstens einen Aufnahmeöffnung gegenüberliegenden Ende der Aufnahmeeinrichtung wenigstens einen Lüfter aufweist.

Die der Erfindung zugrundeliegende Aufgabe wird gemäß dem dritten Aspekt der vorliegen-den Erfindung durch eine Computereinrichtung mit wenigstens einer Aufnahmeeinrichtung und wenigstens einer Baueinheit gelöst, wobei wenigstens eine Baueinheit ein Speicherverbund-Modul, wie z.B. ein RAID-Modul, ist und wobei die Computereinrichtung eine Steuereinrichtung für das wenigstens ein Speicherverbund-Modul aufweist.

Die der Erfindung zugrundeliegende Aufgabe wird gemäß dem vierten Aspekt der vorliegen-den Erfindung durch ein Verfahren zur 2-Faktor-Authentifizierung eines Schreib-/Lesezugriffs auf ein RAID-System gelöst, wobei der erste Faktor die Berechtigung zum Schreiben/Lesen ist und der zweite Faktor die Berechtigung zum Einschalten einer Stromversorgung für die Speichermodule ist.

Die der Erfindung zugrundeliegende Aufgabe wird gemäß dem fünften Aspekt der vorliegen-den Erfindung durch ein Verfahren zur Realisierung einer Fähigkeit eines Einsteckens eines NVMe-SSD-Moduls im laufenden Betrieb, gelöst wobei das Verfahren folgende Schritte aufweist:
(a) Erkennen eines eingesetzten NVMe-SSD-Moduls an einer an einem Massen-Pin davon anliegenden Spannung;
(b) Einschalten der Versorgungsspannung und Anlegen derselben an den Versorgungsspannungs-Pin des NVMe-SSD-Moduls nach einer ersten vorbestimmten Zeitperiode nach Schritt (a); und
(c) Ansteuern des PERST-Pins des NVMe-SSD-Moduls mit einem Rücksetzsignal nach einer zweiten vorbestimmten Zeitperiode nach Schritt (b).

Vorzugsweise wird beim Einstecken eines NVMe-SSD-Moduls ein Masse-Pin des NVMe-SSD-Moduls nicht mit einem Masseanschluss der Baueinheit verbunden. Ein Masse-Anschluss des NVMe-SSD-Moduls wird daher als Anwesenheitssensor für das NVMe-SSD-Modul verwendet.

Weitere bevorzugte Ausführungsformen aller Aspekte der Erfindung sind in den abhängigen Patentansprüchen offenbart.

Die Erfindung, sowie weitere Merkmale, Ziele, Vorteile und Anwendungsmöglichkeiten derselben, wird bzw. werden nachfolgend anhand einer Beschreibung von bevorzugten Ausführungsbeispielen unter Bezugnahme auf die beigefügten Zeichnungen näher erläutert. In den Zeichnungen bezeichnen dieselben Bezugszeichen dieselben bzw. entsprechende Elemente. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1A: eine perspektivische Ansicht einer teilweise bestückten Baueinheit gemäß der vorliegenden Erfindung, wobei die Frontplatte abgenommen, und sieben Trägereinrichtungen eingesteckt, eine Trägereinrichtung teilweise und eine Trägereinrichtung vollständig herausgezogen ist;
- Fig. 1B: eine vergrößerte Ansicht eines durch eine gestrichelt eingezeichnete Kreislinie angezeigten Teils der Fig. 1A;
- Fig. 2A bis 2F: verschiedene Ansichten einer Baueinheit gemäß der vorliegenden Erfindung, wobei Fig. 2A eine perspektivische Ansicht, Fig. 2B eine Ansicht von oben, Fig. 2C eine Ansicht von unten, Fig. 2D eine Seitenansicht, Fig. 2E eine Vorderansicht und Fig. 2F eine Rückansicht zeigt;
- Fig. 3A bis 3D: verschiedene Ansichten einer ersten Art bzw. Variante einer Trägereinrichtung gemäß der vorliegenden Erfindung mit eingesetzter Erweiterungskarte, wobei Fig. 3A eine perspektivische Ansicht, Fig. 3B eine Ansicht von oben, Fig. 3C eine Vorderansicht und Fig. 3D eine Seitenansicht zeigt;
- Fig. 4A bis 4D: verschiedene Ansichten der ersten Art bzw. Variante einer Trägereinrichtung gemäß der vorliegenden Erfindung ohne eingesetzter Erweiterungskarte, wobei Fig. 4A eine perspektivische Ansicht, Fig. 4B eine Ansicht von oben, Fig. 4C eine Vorderansicht und Fig. 4D eine Seitenansicht zeigt;
- Fig. 5A bis 5D: verschiedene Ansichten einer zweiten Art bzw. Variante einer Trägereinrichtung gemäß der vorliegenden Erfindung mit eingesetzter Erweiterungskarte, wobei Fig. 5A eine perspektivische Ansicht, Fig. 5B eine Ansicht von oben, Fig. 5C eine Vorderansicht und Fig. 5D eine Seitenansicht zeigt;
- Fig. 6A bis 6D: verschiedene Ansichten der zweiten Art bzw. Variante einer Trägereinrichtung gemäß der vorliegenden Erfindung ohne eingesetzter Erweiterungskarte, wobei Fig. 6A eine perspektivische Ansicht, Fig. 6B eine Ansicht von oben, Fig. 6C eine Vorderansicht und Fig. 6D eine Seitenansicht zeigt;
- Fig. 7: eine teilweise weggebrochene Darstellung eines hinteren Teils des Innenraums der Baueinheit gemäß der vorliegenden Erfindung, welche vier Trägereinrichtungen im eingesteckten Zustand zeigt;
- Fig. 8: eine Ansicht im Wesentlichen gemäß Fig. 7, wobei die zur Kühlung vorgesehene Luftströmung schematisch eingezeichnet ist;
- Fig. 9: eine teilweise weggebrochene Darstellung eines vorderen Teils des Innenraums der Baueinheit gemäß der vorliegenden Erfindung, welche vier Trägereinrichtungen im eingesteckten Zustand zeigt;
- Fig. 10A: ein stark schematisches Blockschaltdiagramm, des Mikrocontrollers der Baueinheit zur Erläuterung des Einsteckens während des laufenden Betriebs ("Hot-Add");
- Fig. 10B: ein stark schematisches Diagramm, welches verschiedene Signalverläufe beim Einsteckens während des laufenden Betriebs darstellt;
- Fig. 11A bis 11D: perspektivische Ansichten einer erfindungsgemäßen Aufnahmeeinrichtung für bis zu zwei Baueinheiten der vorliegenden Erfindung, wobei Fig. 11A einen Zustand mit zwei eingesetzten Baueinheiten, Fig. 11B einen Zustand mit nur einer eingesetzten Baueinheit, Fig. 11C einen Zustand entsprechend Fig. 11B bei entfernter Busplatine bzw. Rückverdrahtungseinheit und Fig. 11D einen Zustand mit einer eingesetzten, aber ausgeworfenen Baueinheit zeigt;
- Fig. 12A bis 12C: perspektivischen Ansichten eines Auswurfmechanismus für eine erfindungsgemäße Baueinheit, wobei Fig. 12A den Auswurfmechanismus in einem eingezogenen Zustand, Fig. 12B den Auswurfmechanismus in einem teilweise ausgefahrenen Zustand und Fig. 12C in einem vollständig ausgefahrenen Zustand zeigt;
- Fig. 13A bis 13E: verschiedene schematische Aufsichten, welche den Auswurfmechanismus gemäß den Fig. 12A bis 12C in verschiedenen Betriebspositionen zeigt;
- Fig. 14A und 14B: in einer teilweise weggebrochenen perspektivischen Ansicht von unten eine Verriegelung der erfindungsgemäßen Baueinheit in der Aufnahmeeinrichtung mittels des Auswurfmechanismus gemäß den Fig. 12A bis 12C, wobei Fig. 14A den verriegelten und Fig. 14B den entriegelten Zustand zeigt;
- Fig. 15A und 15B,: in einer teilweise weggebrochenen perspektivischen Ansicht von oben, den Auswurfmechanismus gemäß den Fig. 12A bis 12C in näherer Einzelheit, wobei Fig. 15A den verriegelten und Fig. 15B den entriegelten Zustand zeigt;
- Fig. 16A und 16B: Ansichten im Wesentlichen gemäß Fig. 15A bzw. 15B, wobei zum besseren Verständnis ein vorderer Teil des Verriegelungsmechanismus weggeschnitten ist; und
- Fig. 17: eine perspektivische Ansicht einer Steuereinrichtung gemäß der vorliegenden Erfindung mit vier erfindungsgemäßen Aufnahmeeinrichtungen, in welchen jeweils zwei erfindungsgemäße Baueinheiten eingesetzt sind.

In der vorliegenden Beschreibung werden die Ausdrücke "vorne", "hinten", "links" und "rechts", "horizontal" und "vertikal" sowie entsprechende Ausdrücke, wie z.B. Vorderseite, Rückseite etc., unter Bezugnahme auf den bestimmungsgemäß zusammengebauten Zustand der erfindungsgemäßen Vorrichtung von einem Anwender aus gesehen verstanden, welcher auf die erfindungsgemäße Vorrichtung von vorne blickt.

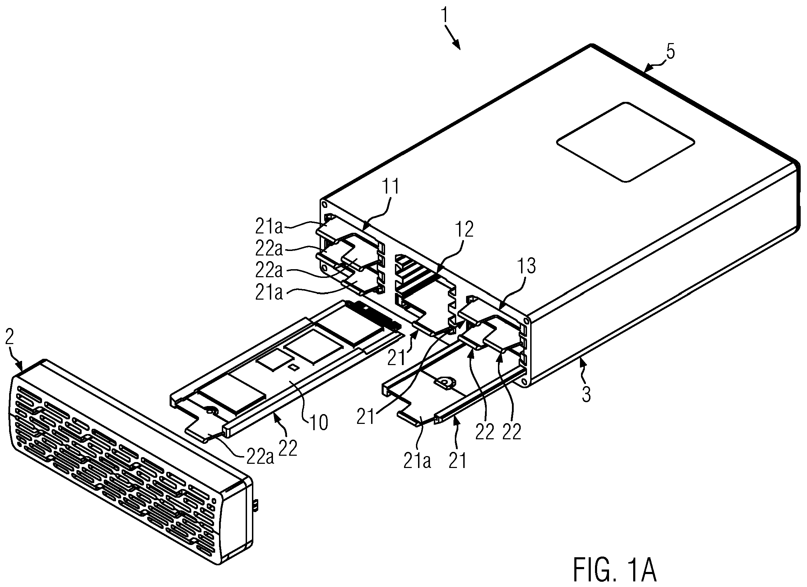

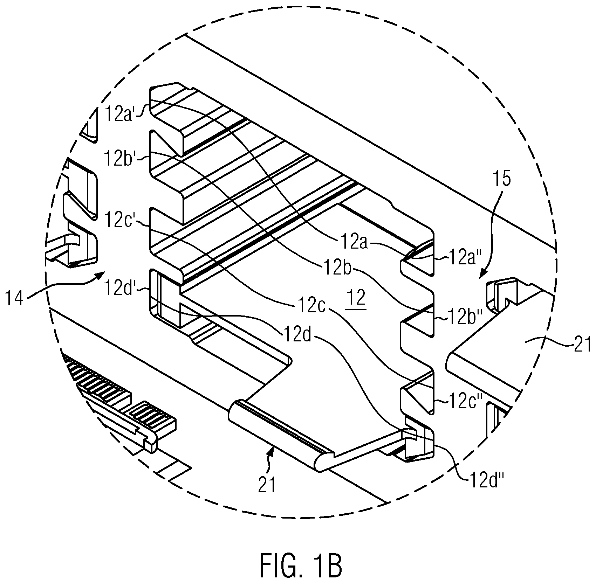

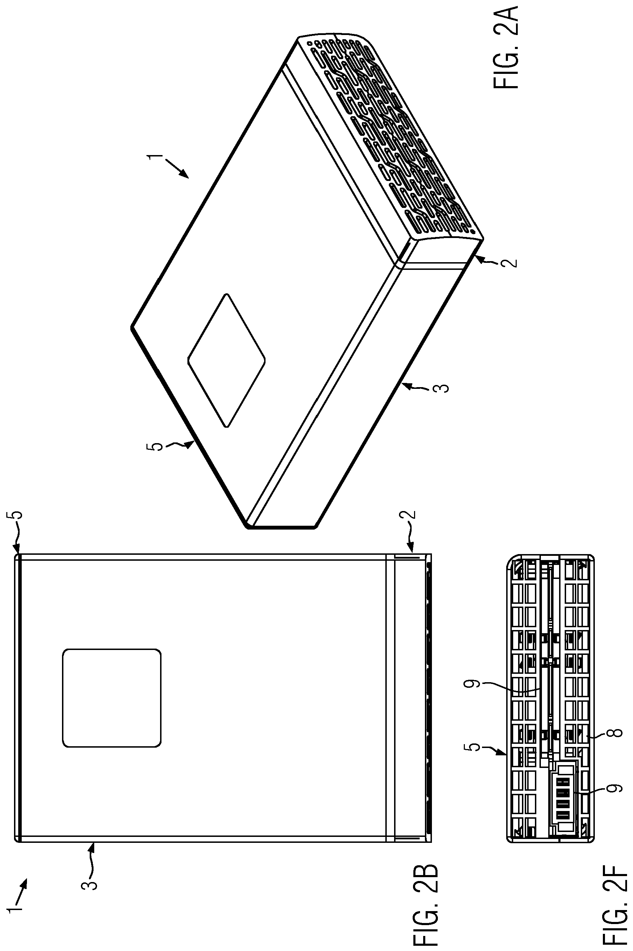

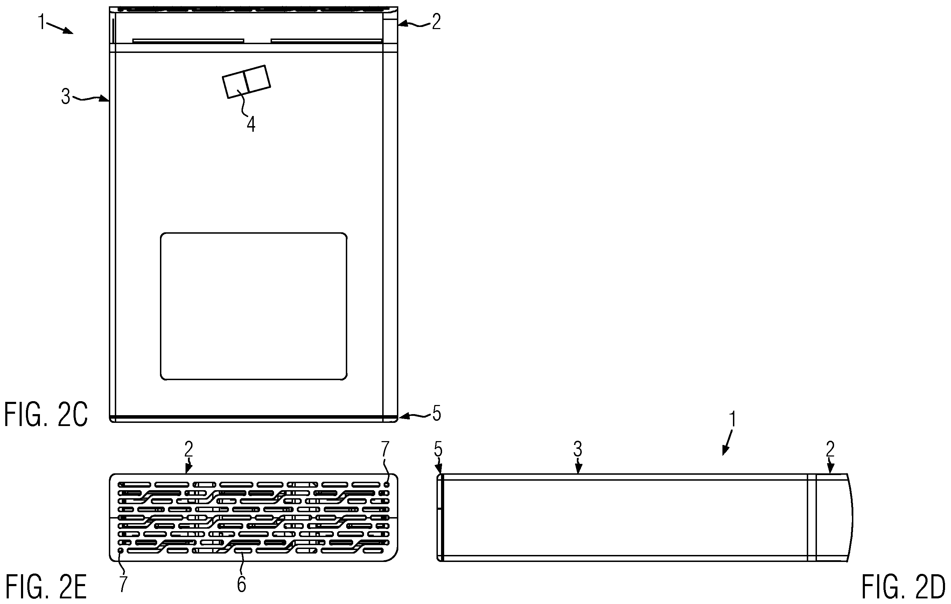

Anhand der Fig. 1A und 1B sowie der Fig. 2A bis 2E wird im Folgenden die erfindungsgemäße Baueinheit 1 näher erläutert. Die Baueinheit 1 ist ein, vorzugsweise auswechselbarer, Teil eines Computers, d.h. sozusagen ein Computermodul, welcher zur Aufnahme von Erweiterungskarten für den Computer dient. Ganz grundsätzlich können die Erweiterungskarten von jeglicher Art sein, und umfassen insbesondere solche, welche mittels des PCIe-Standards angeschlossen werden können. Die Erweiterungskarten entsprechen dabei vorzugsweise dem M.2-Standard und können z.B. Grafikkarten sein, um die Rechenleistung eines Computers zu steigern. Im vorliegenden bevorzugten Ausführungsbeispiel sind die Erweiterungskarten Speichermodule, und zwar vorzugsweise NVMe-SSD-Module. Die Baueinheit stellt daher im bevorzugten Ausführungsbeispiel sozusagen ein auswechselbares Speichermedium, d.h. sozusagen ein auswechselbares Laufwerk, dar. Der vornehmlich Zweck ist dabei das sichere Back-up oder die Langzeitspeicherung von großen Datenmengen. Dabei stellen die Speichermodule der Baueinheit 1 einen Speicherverbund nach Art eines RAID-Systems dar.

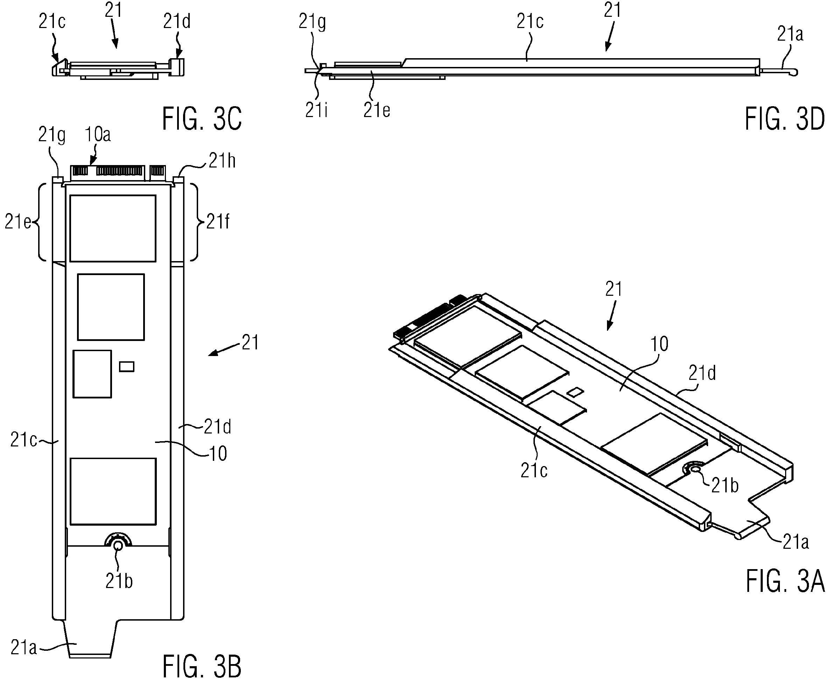

In der Fig. 1A ist die erfindungsgemäße Baueinheit 1 im teilweise geöffneten Zustand dargestellt. Die Baueinheit oder bauliche Einheit 1 weist eine Frontplatte 2, auf welche mit einem (nicht dargestellten) Spezialwerkzeug entfernt werden kann. Die Baueinheit 1 weist ferner ein Gehäuse 3 auf, welches vorzugsweise aus Aluminium gefertigt ist. Das Gehäuse 3 weist im Wesentlichen die Form eines abgeflachten Quaders mit im Wesentlichen hohlem Innenraum auf. Am hinteren Ende des Gehäuses ist eine Rückplatte 5 vorgesehen, welche im Gegensatz zu der Frontplatte vornehmlich in dem Gehäuse 3 versenkt ist. In seinem vorderen Bereich weist das Gehäuse 3 drei Schächte 11, 12 und 13 auf. Die Schächte 11, 12 und 13 ragen etwas über die Mitte des Gehäuses 3 in die Baueinheit 1 hinein und sind durch linke und rechte Trennwände 14 bzw. 15 voneinander getrennt. Im hinteren vollständig hohlen (d.h. ohne die Trennwände 14 und 15) Bereich des Gehäuses 3 sind elektronische Schaltungen angeordnet, auf welche weiter unten näher eingegangen werden wird. Die drei Schächte 11, 12 und 13 sind im Wesentlichen identisch ausgebildet und weisen im Ausführungsbeispiel jeweils vier übereinander angeordnete Paare von linken und rechten Führungsschienen auf. Da die Schächte 11, 12 und 13 sind im Wesentlichen identisch ausgebildet sind, wird im Folgenden lediglich der mittlere Schacht 12 in näherer Einzelheit beschrieben; eine entsprechende Beschreibung gilt dann auch für die linken und rechten Schächte 11 bzw. 13. In Fig. 1 erkennt man gut im mittleren Schacht die von oben nach unten mit 12a, 12b, 12c und 12d bezeichneten Paare von Führungsschienen (vgl. hierzu auch Fig. 1B). Die linke Führungsschiene des obersten, ersten Paars von Führungsschienen 12a ist mit 12a' bezeichnet. Die rechte Führungsschiene des obersten, ersten Paars von Führungsschienen 12a ist mit 12a" bezeichnet. Die linke Führungsschiene des unmittelbar darunterliegenden, zweiten Paars von Führungsschienen 12b ist mit 12b' bezeichnet. Die rechte Führungsschiene zweiten Paars von Führungsschienen 12b ist mit 12b" bezeichnet. Die linke Führungsschiene des unmittelbar darunterliegenden, dritten Paars von Führungsschienen 12c ist mit 12c' bezeichnet. Die rechte Führungsschiene des dritten Paars von Führungsschienen 12c ist mit 12c" bezeichnet. Die linke Führungsschiene des untersten, vierten Paars von Führungsschienen 12d ist mit 12d' bezeichnet. Die rechte Führungsschiene des vierten Paars von Führungsschienen 12d ist mit 12d" bezeichnet. Die Paare von Führungsschienen 12a, 12b, 12c und 12d dienen jeweils zur Aufnahme von Trägereinrichtungen für Erweiterungskarten, welche im vorliegenden Ausführungsbeispiel NVMe-SSD-Module 10 sind. Es gibt zwei Arten von Trägereinrichtungen, welche weiter unten näher unter Bezugnahme auf die Fig. 3A bis 3D und 4A bis 4D bzw. Fig. 5A bis 5D und 6A bis 6D näher beschrieben werden. Der Fig. 1 entnimmt man, dass das oberste Paar von Führungsschienen 12a zum Einsetzen bzw. Einführen einer Trägereinrichtung 21 der ersten Art vorgesehen ist. Das darunterliegende Paar von Führungsschienen 12b ist zum Einsetzen einer Trägereinrichtung 22 der zweiten Art vorgesehen. In Fig. 1 ist die Trägereinrichtung 22 im herausgezogenen Zustand gezeigt. Das dritte Paar von Führungsschienen 12c ist ebenfalls zum Einsetzen einer Trägereinrichtung 22 der zweiten Art vorgesehen, wobei allerdings die Trägereinrichtung 22 verkehrt herum (um die Längsachse der Trägereinrichtung 22 um 180 Grad gedreht) eingesetzt wird, d.h. die Trägereinrichtung 22 wird mit dem NVMe-SSD-Modul 10 nach unten weisend eingesetzt, wobei allerdings ein Handgriff 22a der Trägereinrichtung 22 weiterhin vorne angeordnet ist. Das vierte Paar von Führungsschienen 12d ist zum Einsetzen einer Trägereinrichtung 21 der ersten Art vorgesehen, wobei allerdings ebenfalls die Trägereinrichtung 21 verkehrt herum (um die Längsachse der Trägereinrichtung 21 um 180 Grad gedreht) eingesetzt wird, d.h. die Trägereinrichtung 21 wird mit dem NVMe-SSD-Modul 10 nach unten weisend eingesetzt, wobei allerdings ein Handgriff 21a der Trägereinrichtung 21 weiterhin vorne angeordnet ist. In der Fig. 1 ist im mittleren Schacht 12 die in dem vierten Paar 12d von Führungsschienen eingesetzte Trägereinrichtung 21 gut zu erkennen. Man erkennt in der Fig. 1 gut (vgl. beispielsweise den linken Schacht 11), dass durch die gewählte Anordnung die Handgriffe der Trägereinrichtungen 21 und 22 von oben nach unten alternierend versetzt und damit gut durch einen Anwender greifbar angeordnet sind. Wie im Folgenden noch in weiterer Einzelheit näher erläutert werden wird, stellt das jeweilige Querschnittsprofil der linken und rechten Führungsschienen der Paare 12a, 12b, 12c und 12d von Führungsschienen eine zu einer Profilierung der Querschnitte der Trägereinrichtungen 21, 22 passende Gegenprofilierung dar. Durch entsprechende Ausbildung der Profilierung/Gegenprofilierung wird ein verkehrtes Einstecken der Trägereinrichtungen 21, 22 in das Gehäuse 3 vermieden. Genauer wird sowohl eine fehlerhafte Orientierung einer jeweiligen Trägereinrichtungen 21, 22, als auch ein Vertauschen bzw. falsches Einsetzen der Trägereinrichtungen 21, 22 grundsätzlich ausgeschlossen. Insbesondere ist ein fehlerhaftes Einsetzen einer Trägereinrichtung 21 in 12b oder 12c und ein fehlerhaftes Einsetzen einer Trägereinrichtung 22 in 12a oder 12d ausgeschlossen.

Weitere Einzelheiten der erfindungsgemäßen Baueinheit 1 können den verschiedenen Ansichten der Fig. 2A bis 2E entnommen werden. Die Frontplatte 2 (vgl. Fig. 2E) weist eine Vielzahl von im Wesentlichen horizontal verlaufenden Längsschlitzen 6 auf, durch welche zur Kühlung der NVMe-SSD-Module 10 und der in der Baueinheit 1 untergebrachten Elektronikbauteile dienende Umgebungsluft angesaugt werden kann. Ferner weist die Frontplatte 2 eine Vielzahl von Öffnungen 7 auf, durch welche ein (nicht dargestelltes) Spezialwerkzeug eingesteckt werden kann, um eine Verriegelung der Frontplatte 2 in dem Gehäuse 3 zu lösen, um die Frontplatte 2 abnehmen zu können. Die Rückplatte 5 weist ebenfalls im Wesentlichen horizontal verlaufende der Lüftung dienende Längsschlitze 8 auf. Durch die Lüftungsschlitze 8 strömt die durch die Lüftungsschlitze 6 angesaugte Luft wieder aus dem Gehäuse 3 heraus. Ferner weist die Rückplatte 5 Öffnungen 9 auf, wodurch (nicht dargestellte) Kontakte der Baueinheit 1 verlaufen, so dass beim Einsetzen der Baueinheit 1 diese elektrisch angeschlossen werden kann. Entsprechend werden diese Kontakte durch Herausschieben der Baueinheit 1 unterbrochen, was im Folgenden noch näher erläutert werden wird. Aus der Ansicht von unten gemäß Fig. 2C entnimmt man, dass im vorderen Bereich auf der Unterseite des Gehäuses 3 eine Ausnehmung bzw. Kerbe 4 ausgebildet ist, welche zur Verriegelung bzw. Arretierung der Baueinheit 1 in einer im Folgenden zu beschreibenden Aufnahmeeinrichtung dient. Die Ausnehmung 4 ist schräg zu einer Längsrichtung der Baueinheit 1 ausgebildet.

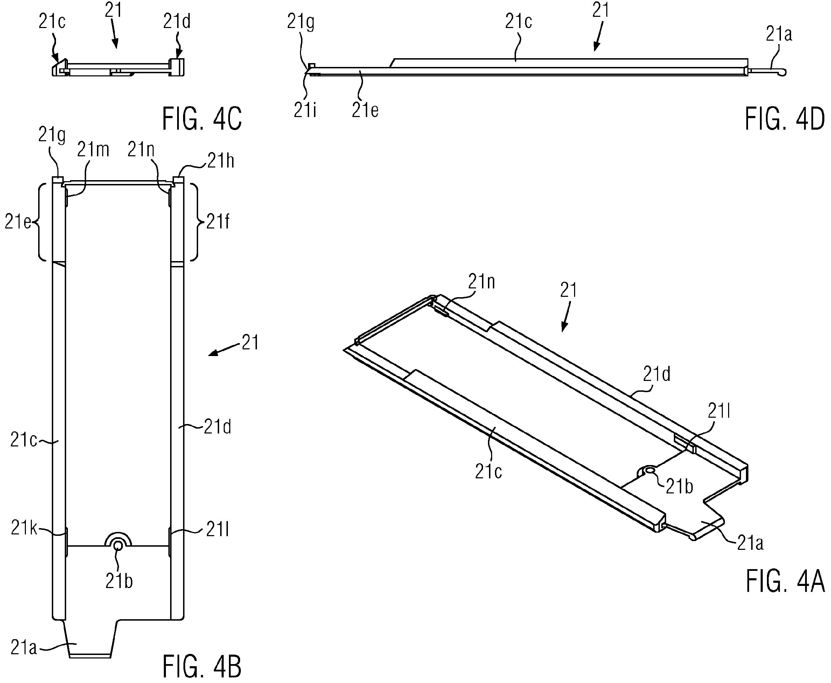

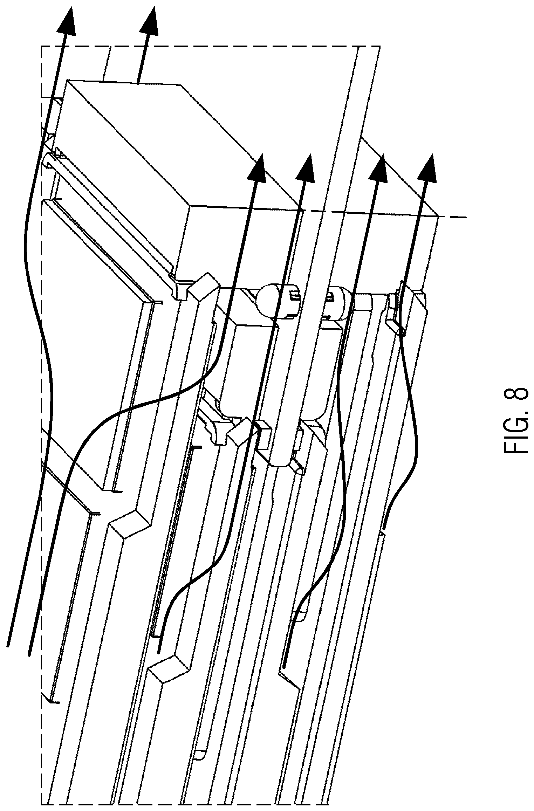

Anhand der Fig. 3A bis 3D (mit eingesetztem NVMe-SSD-Modul 10) und Fig. 4A bis 4D (ohne NVMe-SSD-Modul 10) wird nun eine erfindungsgemäße Trägereinrichtung 21 der ersten Art in weiterer Einzelheit näher erläutert. Die Trägereinrichtung 21 ist vorzugsweise aus Plastik bzw. Kunststoff hergestellt. Ferner ist die Trägereinrichtung 21 bevorzugt transparent bzw. durchsichtig, und insbesondere farblos, ausgebildet. Die Trägereinrichtung 21 dient als Lichtleiter wie im Folgenden noch näher erläutert werden wird. Die Trägereinrichtung 21 besitzt im Wesentlichen die Form eines rechteckigen Rahmens und weist einen Handgriff 21a auf, welcher vorne links angeordnet ist. Über ein hinteres Ende der Trägereinrichtung 21 ist ein NVMe-SSD-Modul 10 bis zu dem Anschlag 21b, auf der Oberseite der Trägereinrichtung 21, und zwar gegen Nocken 21k, 21l, 21m und 21n, in Innenschlitze linker und rechter Führungsschienen 21c bzw. 21d eingesetzt. Anschlüsse bzw. Kontakte 10a des NVMe-SSD-Moduls 10 ragen dabei über die Trägereinrichtung 21 am hinteren Ende derselben hinaus. Die Anschlüsse 10a des NVMe-SSD-Moduls 10 sind gemäß dem M.2-Standard ausgebildet. Insbesondere der Fig. 3C entnimmt man das unterschiedliche Querschnittsprofil der linken und rechten Führungsschienen 21c bzw. 21d. Die rechte Führungsschiene 21d besitzt ein im Querschnitt rechteckiges Profil, wobei die Längsseite des rechteckigen Profils von oben nach unten verläuft. Bei der linken Führungsschiene 21c ist im Unterschied zu der rechten Führungsschiene 21d die obere Kante des Rechtecks abgeschrägt, und zwar nach außen unten. Man entnimmt einer Zusammenschau der Fig. 1A und 3C, dass die Trägereinrichtung 21 der ersten Art in das erste Paar von Führungsschienen 12a einfach und sicher mit der korrekten Orientierung eingesetzt werden kann. Die Innen-Querschnittsprofilierung der linken Führungsschiene 12a' ist dabei eine zu dem Außen-Querschnittsprofil der linken Führungsschiene 21c der Trägereinrichtung 21 bündig passende Gegenprofilierung. Ferner ist die Innen-Querschnittsprofilierung der rechten Führungsschiene 12a" ist dabei eine zu dem Außen-Querschnittsprofil der rechten Führungsschiene 21d der Trägereinrichtung 21 bündig passende Gegenprofilierung. Ferner entnimmt man einer Zusammenschau der Fig. 1A und 3C, dass die Trägereinrichtung 21 der ersten Art in das vierte Paar von Führungsschienen 12d einfach und sicher mit der korrekten Orientierung, d.h. verkehrt herum im Vergleich zu dem ersten Paar von Führungsschienen 12a, d.h. die Trägereinrichtung wird um 180 Grad um deren Längsachse gedreht, eingesetzt werden kann. Die Innen-Querschnittsprofilierung der linken Führungsschiene 12d' ist dabei eine zu dem um 180 Grad gedrehten Außen-Querschnittsprofil der rechten Führungsschiene 21d der Trägereinrichtung 21 bündig passende Gegenprofilierung. Ferner ist die Innen-Querschnittsprofilierung der rechten Führungsschiene 12d" dabei eine zu dem um 180 Grad gedrehten Außen-Querschnittsprofil der linken Führungsschiene 21c der Trägereinrichtung 21 bündig passende Gegenprofilierung. Am hinteren Ende weisen die Führungsschienen 21c und 21d einen abgeflachten Bereich 21e bzw. 21f auf. in den Bereichen 21e und 21 ist die Höhe der Führungsschienen 21c und 21d in etwa auf die Hälfte reduziert (vgl. insbesondere Fig. 3D). In diesem Bereich geht dabei zwar die Profilierung verloren, dies bietet aber zusätzliche Vorteile in Bezug auf den Strömungsverlauf der zur Kühlung dienenden Luftströmung, was weiter unten in Verbindung mit Fig. 8 näher erläutert werden wird. Am äußersten Ende weisen die Führungsschienen 21c und 21d eine abgeschrägte Fläche 21g bzw. 21h auf. Die Flächen 21g und 21h sind dabei in einem Winkel von etwa 45 Grad nach hinten unten abgeschrägt (vgl. Fig. 3D).

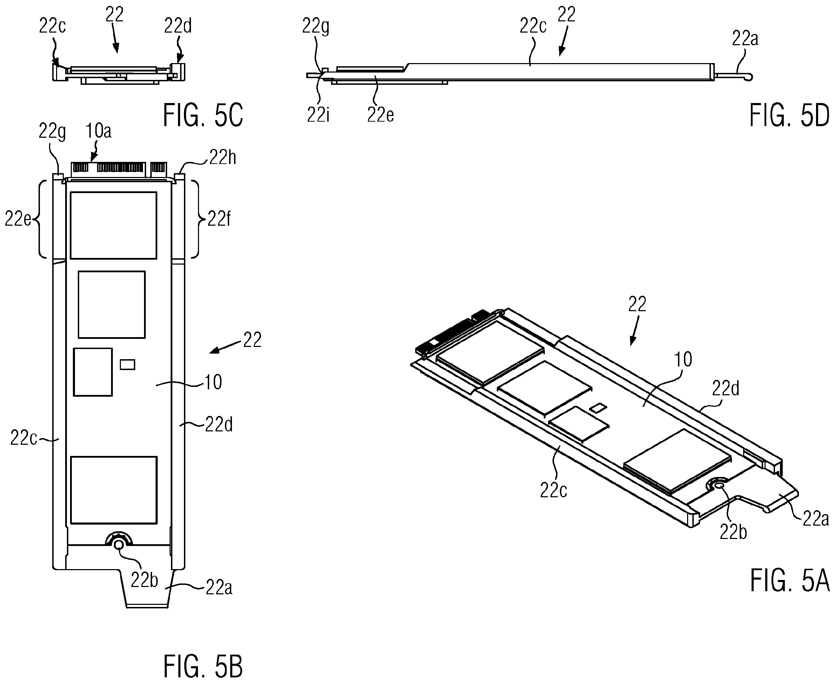

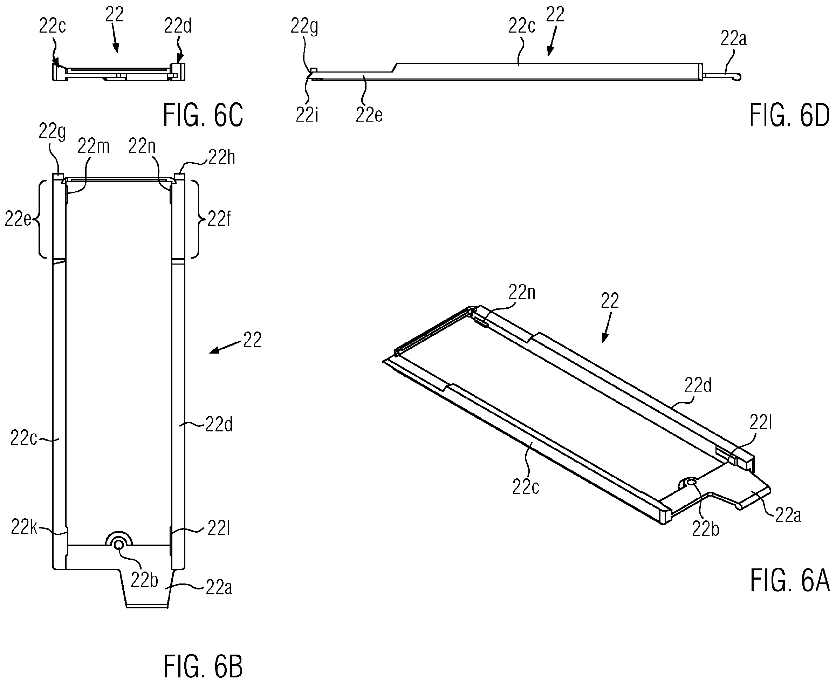

In den Fig. 5A bis 5D (mit eingesetztem NVMe-SSD-Modul 10) und Fig. 6A bis 6D (ohne NVMe-SSD-Modul 10) ist eine erfindungsgemäße Trägereinrichtung 22 der zweiten Art in weiterer Einzelheit entsprechend den vorgehend bereits im Detail beschriebenen Fig. 3A bis 3D und Fig. 4A bis 4D dargestellt. Die Trägereinrichtungen 22 der zweiten Art sind im Allgemeinen ähnlich bzw. entsprechend den Trägereinrichtungen 21 der ersten Art ausgebildet. Um Wiederholungen daher zu vermeiden, wird im Folgenden lediglich auf die Unterschiede zwischen den Trägereinrichtungen 21 und 22 eingegangen. Die Trägereinrichtung 22 ist kürzer als die Trägereinrichtung 21 ausgebildet, was mit der Anordnung der Steckkontakte bzw. Buchsen für das NVMe-SSD-Modul 10 zusammenhängt, worauf im Folgenden noch näher eingegangen wird. Der Handgriff 22a der Trägereinrichtung 22 ist vorne links angeordnet. Während die Querschnittsprofilierung der Führungsschiene 22d identisch zu der Querschnittsprofilierung der Führungsschiene 21d ausgebildet ist, ist die Querschnittsprofilierung bzw. das Querschnittsprofil der Führungsschiene 22c verschieden zu der Querschnittsprofilierung bzw. dem Querschnittsprofil der Führungsschiene 21c. Genauer ist die Querschnittsprofilierung der Führungsschiene 22c am oberen Ende nach innen unten abgeschrägt.

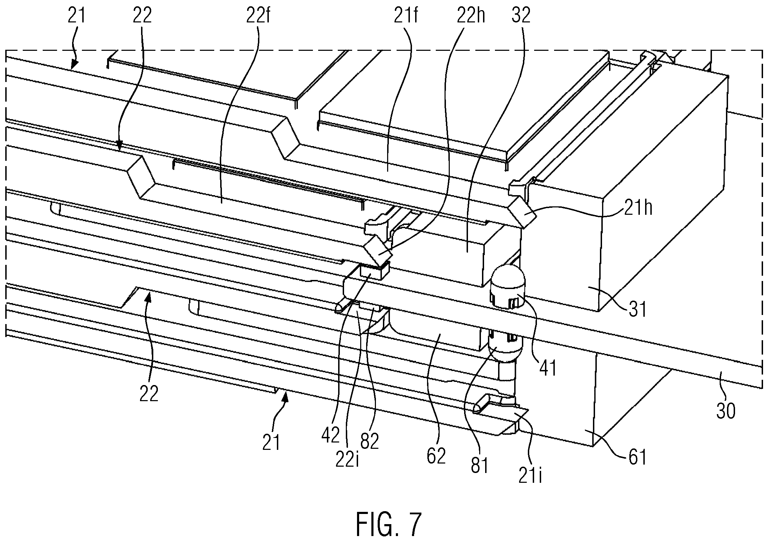

Anhand der teilweise weggebrochenen Ansichten der Fig. 7, Fig. 8 und Fig. 9 werden im Folgenden weitere Einzelheiten der erfindungsgemäßen Baueinheit 1 näher erläutert. In den Fig. 7, Fig. 8 und Fig. 9 erkennt man, dass die Trägereinrichtungen in der Reihenfolge 21, 22, 22, 21 (von oben nach unten oder umgekehrt) eingesetzt sind.

Das hintere Ende der Baueinheit ist in weiterer Einzelheit in den Fig. 7 und 8 dargestellt. In dem hinteren Bereich des Gehäuses 3, in welchem keine Trennwände 14, 15 vorhanden sind, ist eine Platine 30 horizontal in dem Gehäuse 3 angeordnet, und zwar mittig in sowohl vertikaler als auch horizontaler Richtung. Man erkennt in den Fig. 7 und 8 sozusagen den Bereich hinter dem Schacht 13 (vgl. Fig. 1A). Die Platine 30 ist dabei an der Rückplatte 5 befestigt und kann mit dieser aus dem Gehäuse 3 entnommen werden. Auf der Oberseite der Platine 30 ist eine erste vordere Buchse 32 und eine zweite hintere Buchse 31 angeordnet. Die Steckkontakte der Buchsen 31 und 32 weisen zu den Trägereinrichtungen 21, 22, 22, 21 im eingesetzten Zustand hin. Die Buchsen 31 und 32 sind allerdings verschieden ausgebildet. Genauer sind die Steckkontakte der Buchse 31 oberhalb der Buchse 32 angeordnet, dass das in der Trägereinrichtung 21 eingesetzte NVMe-SSD-Modul 10 über die Buchse 31 hinweg in die Steckkontakte der Buchse 31 eingesteckt werden können. Die hintere Buchse 31 besitzt daher sozusagen im Vergleich zu der Buchse 32 einen Sockel und die Steckkontakte der Buchse 31 sind erhöht. Die Trägereinrichtungen 21 sind länger als die Trägereinrichtungen 22 ausgebildet, und zwar entsprechend der längeren Einführungsdistanz in die Buchse 31. Neben den Buchsen 31 und 31 sind Leuchtdioden 41 und 42 angeordnet, welche beispielsweise angesteuert werden können, um einen Betriebszustand des NVMe-SSD-Moduls 10 anzuzeigen. Die Leuchtdioden 41 und 42 sind individuell adressierbare RGB-Leuchtdioden und leuchten z.B. grün, falls der Betriebszustand "in Ordnung" ist. Die Leuchtdioden 41 und 42 leuchten z.B. rot, falls der Betriebszustand "nicht in Ordnung" ist. Die Leuchtdioden 41 und 42 sind dabei von der Vorderseite des Gehäuses 3 auch bei abgenommener Frontplatte 2 grundsätzlich nicht sichtbar, weshalb die Trägereinrichtungen 21, 22 wie oben beschrieben als Lichtleiter ausgebildet sind. Das äußerste Ende 21h der Führungsschiene 21 liegt mit einer planen Fläche 21i senkrecht über der Leuchtdiode. Das Licht der Leuchtdiode 41 wird daher über die plane untere Fläche 21i der Führungsschiene 21d in die Trägereinrichtung 21 eingekoppelt. Die unmittelbar darüber liegende abgeschrägte Fläche 21h wirkt dabei als Spiegel, welcher das eingekoppelte Licht entlang der Trägereinrichtung 21 nach vorne, d.h. in Richtung des Handgriffs 21a, durch Totalreflexion leitet bzw. spiegelt. Das Licht der Leuchtdiode 41, d.h. vorzugsweise der Betriebszustand, ist daher vorne, d.h. insbesondere am Handgriff 21a, sichtbar. Ein Anwender kann daher unmittelbar ein defektes NVMe-SSD-Modul 10 erkennen und austauschen. Entsprechend der Leuchtdiode 41 ist eine Leuchtdiode 42 vorgesehen, welches Licht in entsprechender Weise, wie zuvor beschrieben, in die Trägereinrichtung 22 einkoppelt. Da der Abstand der Leuchtdiode 41 zu der Trägereinrichtung 21 länger als der Abstand der Leuchtdiode 42 zu der Trägereinrichtung 22 ist, ist unmittelbar vor bzw. über der Leuchtdiode 41 (anders als bei der Leuchtdiode 42) eine optische Einrichtung, vorzugsweise in Form einer Sammellinse, vorgesehen, um ein zu starkes Divergieren des von der Leuchtdiode 41 ausgesandten Lichts, bevor es in die Trägereinrichtung 21 eintritt, zu vermeiden. Der Fig. 7 entnimmt man deutlich, dass unterhalb der Platine 30 und spiegelsymmetrisch zu dieser, zwei weitere Buchsen 61 und 62 (entsprechend den Buchsen 31 bzw. 32) und zwei weitere Leuchtdioden 81 und 82 (entsprechend den Leuchtdioden 41 bzw. 42) vorgesehen sind. Entsprechend sind auf der Platine auch weitere (nicht gezeigte) Buchsen und Leuchtdioden hinter den beiden weiteren Schächten 11 und 12 ausgebildet.

Die in Fig. 7 dargestellte Anordnung der Steckkontakte für die NVMe-SSD-Modul 10 ist nicht nur aus baulichen Gründen, um die Kompaktheit der Baueinheit 1 zu erhöhen, bevorzugt, sondern ermöglicht auch eine besonders effizient Kühlung mittels durch die Frontplatte 2 angesaugter Luft, was bei einer kompakten Anordnung von besonderer Bedeutung ist.

Die sich ergebende der Kühlung dienende Luftströmung ist schematisch durch die in Fig. 8 (die im Wesentlichen der Fig. 7 entspricht) angezeigten Pfeile gezeigt. Die Buchsen 31, 32, 61 und 62 bilden im Wesentlichen ein einziges Hindernis, um welches die Kühlluft herum strömen kann, was durch die abgeflachten Abschnitte 21e und 21f der Trägereinrichtungen 21 (und entsprechend durch die abgeflachten Abschnitte 22e und 22f der Trägereinrichtungen 22) weiter verbessert wird.

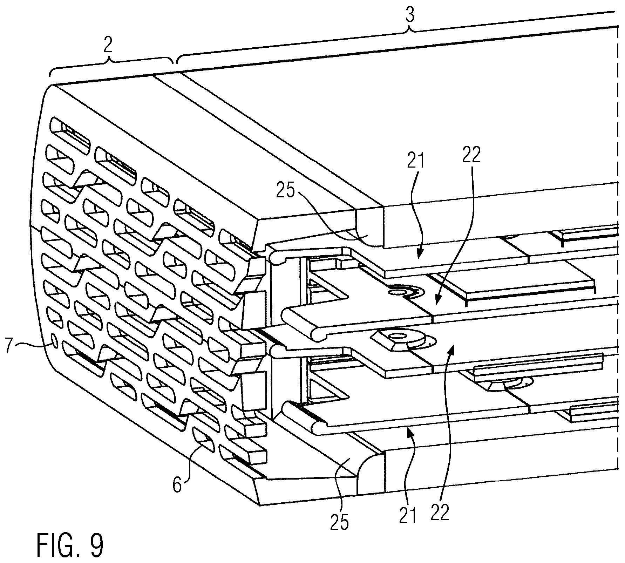

Dem dargestellten Schnitt in Fig. 9, welcher das vordere Ende der Baueinheit 1 zeigt, entnimmt man, dass die Frontplatte 2 an ihrem inneren, d.h. dem Gehäuse 3 zugewandten Ende, einen umlaufenden, im Querschnitt durch die Frontplatte 2 abgerundeten, Abschnitt 25 aufweist, welcher im Querschnitt die Kontur eines Viertelkreises besitzt. Durch diesen Abschnitt 25 wird durch die Lüftungsschlitze 6 der Frontplatte 2 angesaugte Luft derart in das Gehäuse 3 geleitet, dass Turbulenzen vermieden werden und die Strömung nicht abreißt, was die Kühlungswirkung des Luftstroms optimiert. Durch den Abschnitt 25 wird dabei der größere Strömungsquerschnitt der Frontplatte 2 auf den kleineren Strömungsquerschnitt des Gehäuses 3 graduell allmählich verkleinert, was die Kühlung weiter verbessert.

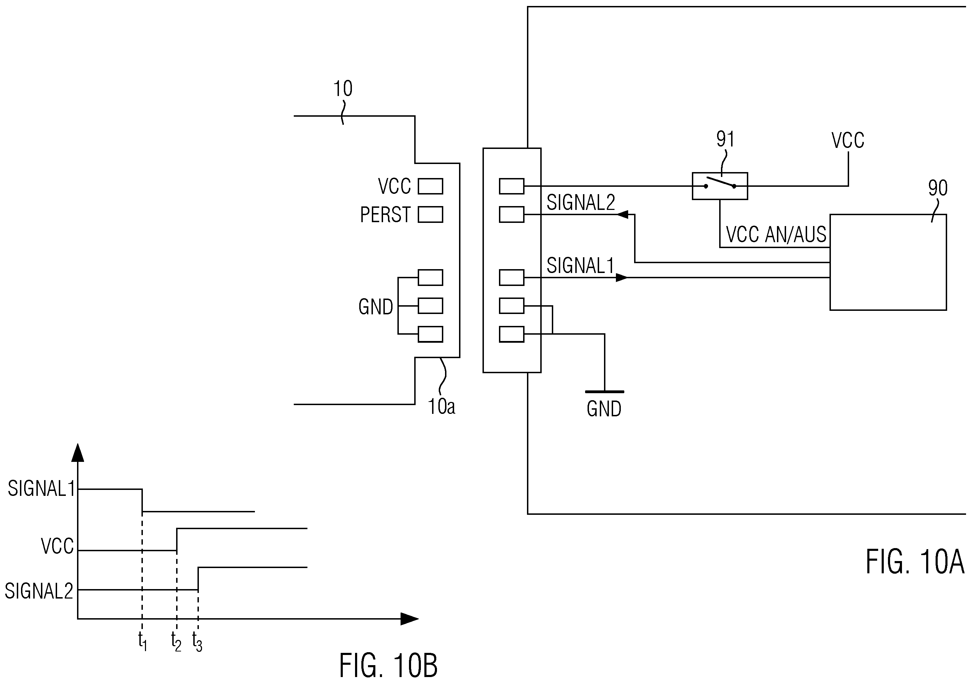

Unter Bezugnahme auf die Fig. 10A und 10B wird im Folgenden die Realisierung eines Einsteckens während des laufenden Betriebs für das NVMe-SSD-Modul 10 näher erläutert. Im Unterschied zu PCIe besitzt das NVMe-SSD-Modul 10 grundsätzlich keine Fähigkeit des Einsteckens während des laufenden Betriebs. Diese kann gemäß dem Stand der Technik eigentlich nur durch vorauseilende Kontakte realisiert werden, welche bei dem NVMe-SSD-Modul 10 allerdings nicht ausgebildet sind. Hier schafft die Erfindung durch Vorsehen einer Steuereinrichtung, die vorzugsweise als Mikroprozessor 90 ausgebildet ist (vgl. Fig. 10A), Abhilfe. Der Mikroprozessor 90 ist auf der Platine 30 in der Baueinheit 1 angeordnet. Der Mikroprozessor 90 kann über einen Schalter 91 die Versorgungsspannung VCC einschalten. Bei nicht eingestecktem NVMe-SSD-Modul 10 ist der Schalter offen, d.h. die Versorgungsspannung VCC liegt nicht an dem entsprechenden Pin bzw. Kontakt des NVMe-SSD-Modul 10 an. Sobald das NVMe-SSD-Modul 10 eingesteckt ist, erkennt der Mikroprozessor 90, dass sich die Spannung an einem der Masse-Anschlüsse ändert (Zeitpunkt t₁ in Fig. 10B) und kann somit die Anwesenheit des NVMe-SSD-Moduls 10 abfühlen (Signal: SIGNAL1, vgl. den oberen Teil der Fig. 10B). Ein Masseanschluss GND des NVMe-SSD-Moduls 10 wird daher beim Einstecken nicht mit Masse verbunden, sondern zur Abfühlung der Anwesenheit des NVMe-SSD-Modul 10 verwendet. Nach einer vorgegeben Zeitdauer (t₂-t₁, vgl. den mittleren Teil der Fig. 10B) von etwa 100 ms schaltet der Mikroprozessor 90 die Versorgungsspannung frei und diese liegt an dem entsprechenden VCC-Pin des NVMe-SSD-Moduls 10 an (Zeitpunkt t₂ in Fig. 10B). Nach einer weiteren vorgegebenen Zeitdauer von etwa 100 ms (t₃-t₂, vgl. den unteren Teil der Fig. 10B) sendet der Mikroprozessor 90 zunächst, d.h. vor jeglicher Kommunikation, ein Rücksetz-Signal SIGNAL2 an den entsprechenden PERST-Pin des Speichermoduls 10, um die Kommunikation vor dem Start einer neuen Kommunikation zurückzusetzen. Der Mikroprozessor 90 steuert auch einen nicht gezeigten NFC-Tag an und kann diesen beschreiben, so dass dieser durch ein NFC-fähiges Gerät, wie z.B. ein Smartphone eines Anwenders, kontaktlos ausgelesen werden kann, und zwar insbesondere in einem Fall in welchem die Baueinheit aus dem Gehäuse entnommen ist, d.h. im stromlosen Zustand. Die über NFC auslesbaren Informationen weisen insbesondere den Namen der Baueinheit, den Füllstand und/oder Informationen über vorhandene oder nicht vorhandene Defekte auf. Der Mikroprozessor 90 kontrolliert auch einen verschlüsselten Zugriff zu dem Einschalten der Versorgungsspannung VCC, wodurch eine 2-Faktor-Authentifizierung realisiert werden kann, da für einen Zugriff zum Schreiben/Lesen ebenfalls ein Zugriffsschlüssel erforderlich ist.

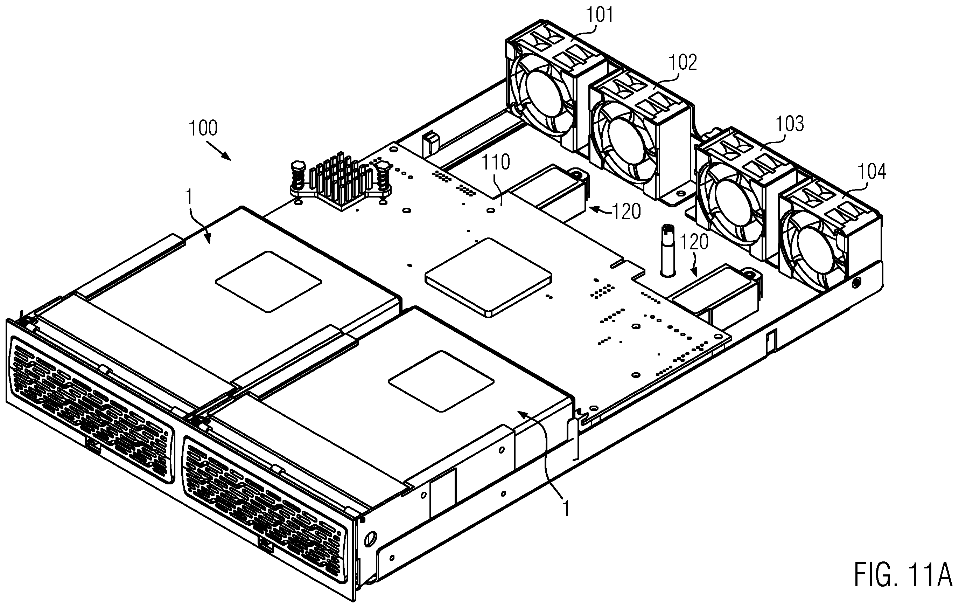

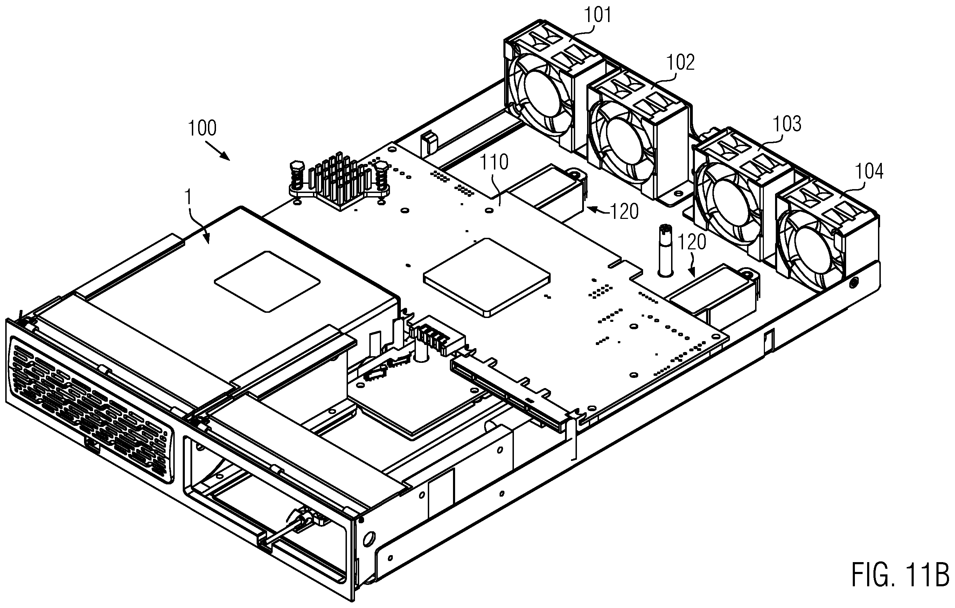

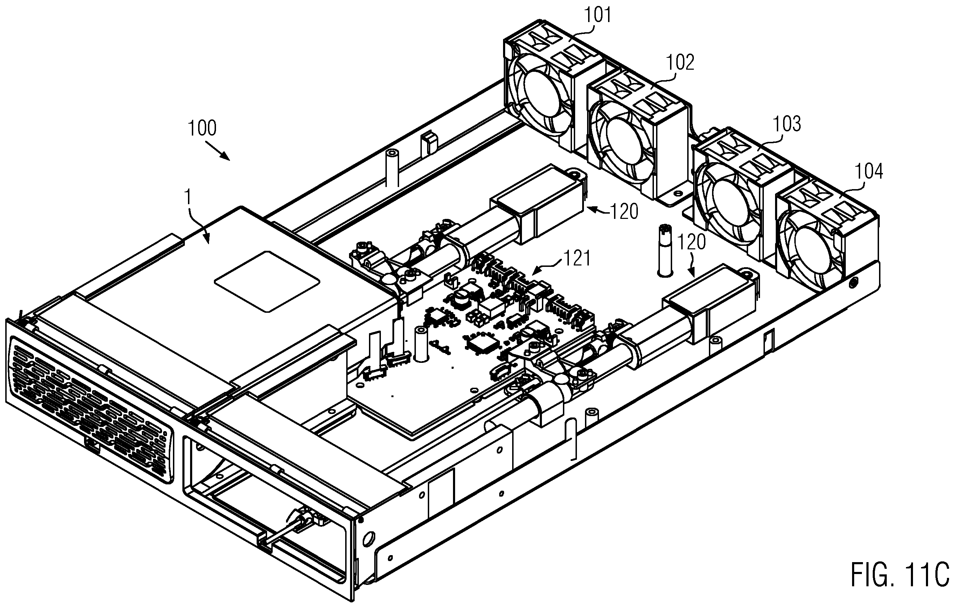

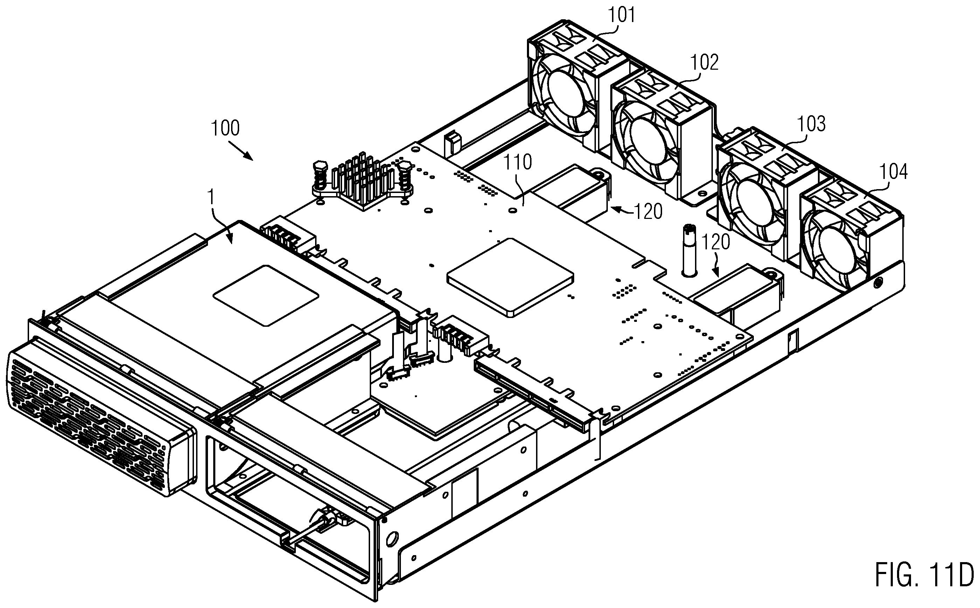

Die Fig. 11A bis 11D zeigen perspektivische Ansichten einer erfindungsgemäßen Aufnahmeeinrichtung 100 für bis zu zwei Baueinheiten 1 der vorliegenden Erfindung. Dabei zeigt Fig. 11A einen Zustand mit zwei eingesetzten Baueinheiten 1. Fig. 11B zeigt einen Zustand mit nur einer eingesetzten Baueinheit 1. Die Baueinheit(en) 1 sind vorne in der Aufnahmeeinrichtung 100 eingesetzt. Am hinteren Bereich sind Lüfter 101, 102, 103 und 104 angeordnet, welche der Kühlung dienende Umgebungsluft durch die Frontplatten 2 und die Rückplatte 5 der Baueinheiten 1 ansaugen. Die Fig. 11C zeigt einen Zustand entsprechend Fig. 11B bei entfernter Busplatine bzw. Rückverdrahtungseinheit 110. Der Ansicht der Fig. 11C entnimmt man einen Auswurfmechanismus 120 und eine zugehörige Elektronikschaltung 121, wobei der Auswurfmechanismus 120 im Folgenden näher beschrieben wird. Schließlich zeigt Fig. 11D einen Zustand mit einer eingesetzten, aber durch den Auswurfmechanismus 120 herausgeschobenen Baueinheit 1.

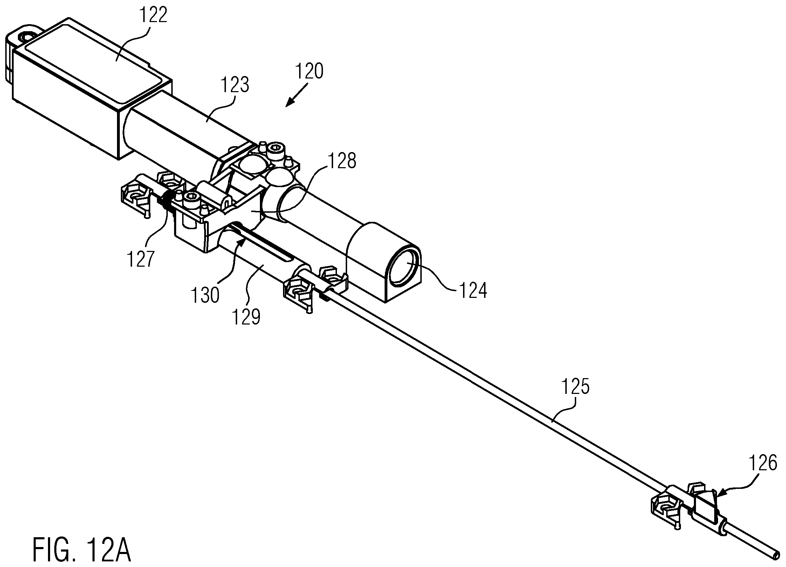

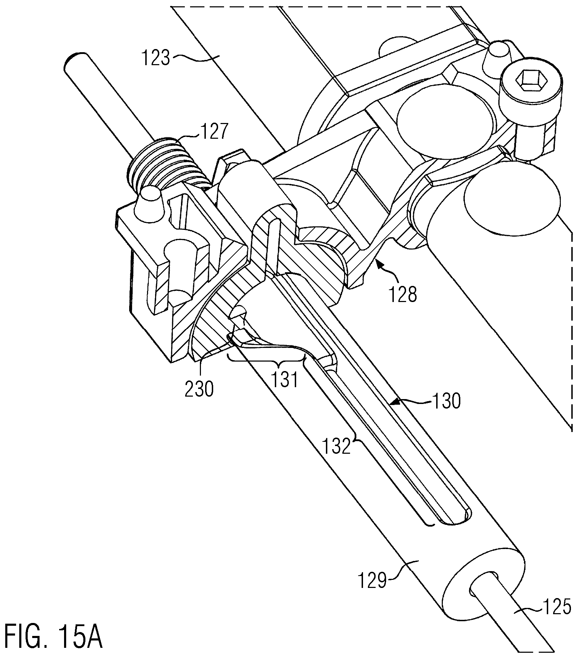

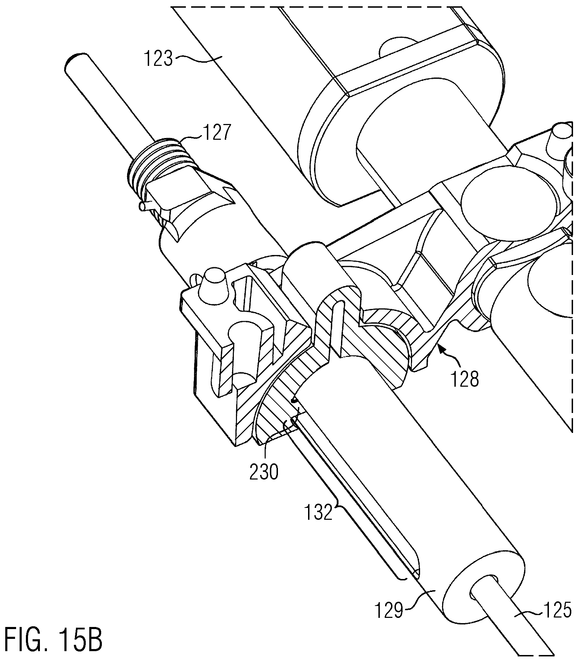

Anhand der Fig. 12A bis 12C, 13A bis 13E, 15A und 15B sowie 16A und 16B wird im Folgenden eine Auswurfeinrichtung bzw. ein Auswurfmechanismus 120 beschrieben. Der Auswurfmechanismus 120 dient vornehmlich dazu, eine Baueinheit 1 mechanisch auszuwerfen, d.h. einige mm oder cm, vorzugsweise ca. 15 mm, aus der Vorrichtung herauszuschieben (vgl. Fig. 11D), so dass insbesondere auch keine elektrische Verbindung mehr besteht und die Baueinheit 1 aus der Vorrichtung einfach entnommen werden kann. Ein Bedarf für einen derartigen Auswurf einer Baueinheit 1 kann beispielsweise darin bestehen, dass die Baueinheit 1 im Hinblick auf einen Hackerangriff geschützt werden soll, oder dass die Baueinheit 1 entnommen werden muss, etwa wenn eine anderweitige Aufbewahrung, z.B. in einem Bankschließfach, oder ein Transport notwendig ist, oder auch im Fall eines Defekts oder einer Korruption der Baueinheit 1, welche einen Austausch erforderlich macht.

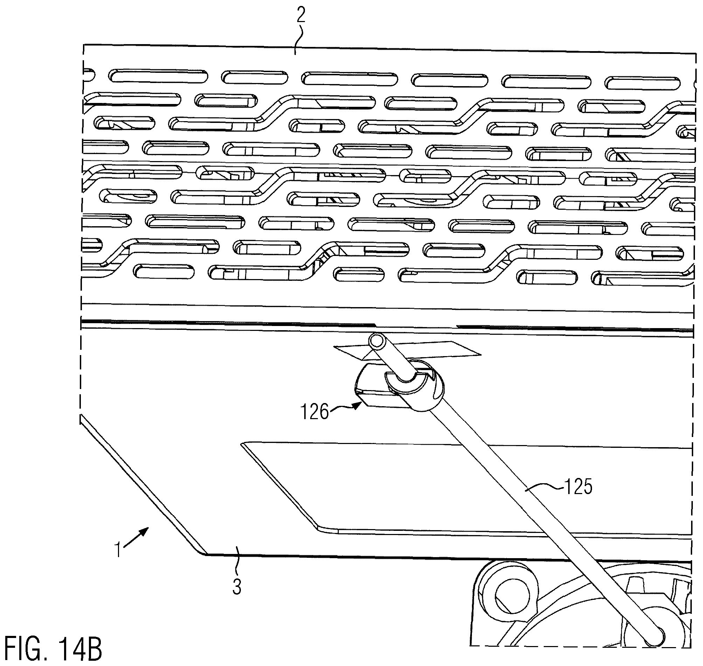

Der bevorzugte Auswurfmechanismus 120 weist zudem eine Verriegelungsfunktion und eine Blockierfunktion auf. In weiterer Einzelheit weist der Auswurfmechanismus 120 einen elektrischen Linearmotor 122 auf, welcher über ein Getriebe 123 einen Stempel 124 in einer Vorwärts- und Rückwärtsrichtung antreibt. Der Stempel 124 drückt von hinten auf die Rückplatte 5 der Baueinheit 1, falls diese ausgeworfen werden soll. Die Endstellung des Stempels 124 dient dabei auch zum Blockieren, da eine Baueinheit 1 bei derart ausgefahrenem Stempel 124 nicht mehr durch einen Anwender manuell eingesetzt werden kann. Erst nach entsprechender Ansteuerung des Linearmotors 122 und korrespondierendem Zurückfahren des Stempels 124 kann die Baueinheit 1 wieder eingesetzt werden. Ferner weist der Auswurfmechanismus 120 eine Verriegelungsstange 125 auf. Die Verriegelungsstange 125 weist an dem vom Linearmotor abgewandten Ende einen Riegel 126 auf, welcher, bei ordnungsgemäß bündig eingesetzter Baueinheit 1, direkt unter der entsprechenden Materialausnehmung bzw. Kerbe 4 auf der Unterseite der Baueinheit 1 angeordnet ist. Die Verriegelungsstange 125 kann um 90 Grad gedreht werden, wobei die beiden Endpositionen der Drehung einer Freigabeposition (siehe auch Fig. 14B) bzw. einer Verriegelungsposition (siehe auch Fig. 14B) für die Baueinheit 1 entsprechen. Die Drehung der Verriegelungsstange 125 erfolgt grundsätzlich ebenfalls über den Linearmotor 122 wie weiter unten im Detail erläutert wird; eine Freigabe der Blockierung kann aber auch durch Drehung der Verriegelungsstange 125 mit einem (nicht dargestellten) Spezialschlüssel erzielt werden. Der Spezialschlüssel weist dabei einen hohlzylindrischen Abschnitt auf, um über die Verriegelungsstange 125 gesteckt zu werden. Ferner weist der Spezialschlüssel einen entsprechend ausgebildeten Fortsatz auf, um, angreifend am Riegel 126, die Blockadeposition des Riegels 126 durch Drehung der Verriegelungsstange 125 um 90 Grad entgegen der Vorspannung einer Torsionsfeder 127 manuell zu lösen.

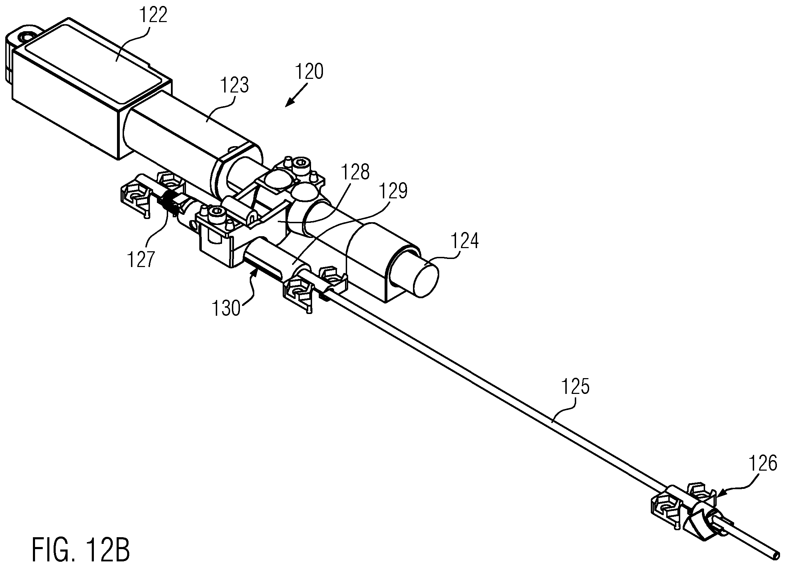

Über eine Brücke 128 ist die Verriegelungsstange 125 an die Linearbewegung des Stempels 124 gekuppelt, und zwar derart, dass im eingezogenen Betriebszustand des Stempels 124 der Riegel 126 in Verriegelungsstellung, d.h. aufgerichtet ist (vgl. Fig. 12A). Wird der Stempel 124 ausgefahren, so wird der Riegel 126 um 90 Grad umgeklappt, d.h. die Baueinheit 1 wird entriegelt (vgl. Fig. 12B). Wird der Stempel 124 wieder eingefahren, so findet wiederum ein Umklappen des Riegels 126 um 90 Grad statt, d.h. die Baueinheit 1 wird verriegelt (vgl. Fig. 12A).

Zur Realisierung eines Kurvengetriebes, welches die Drehung der Verriegelungsstange 125 aus der über die Brücke 128 übertragenen Linearbewegung realisiert, weist die Verriegelungsstange eine fest daran angebrachte zylindrische Hülse 129 auf, in welcher eine (Führungs-)Nut 130 ausgebildet ist. In der Nut 130 bewegt sich ein Spurzapfen 230, der durch die im Ausführungsbeispiel als Schenkelfeder ausgebildete Torsionsfeder 127 gegen eine Wand der Nut 130 vorgespannt ist. Die Nut 130 weist einen ersten Bereich 131 auf, welcher um 90 Grad nach Art einer Schraubenlinie verläuft. Ferner weist die Nut einen zweiten, sich an den ersten Bereich 131 anschließenden Bereich 132 auf, welcher gerade, und zwar in Längsrichtung der Verriegelungsstange 125, ausgebildet ist. Der erste, gekrümmte Bereich 131 der Nut 130 ist dabei an der dem Riegel 126 abgewandten Seite der Hülse 129 ausgebildet und der zweite, gerade Bereich 132 der Nut 130 ist dabei an der dem Riegel 126 zugewandten Seite der Hülse 129 ausgebildet. Eine Drehung der Verriegelungsstange 125 und damit des Riegels 126 erfolgt dabei während einer Bewegung des Spurzapfens 230 in dem ersten Bereich 131 der Nut 130. Keine Drehung der Verriegelungsstange 125 und damit des Riegels 126 erfolgt während einer Bewegung des Spurzapfens 230 in dem zweiten Bereich 132 der Nut 130.

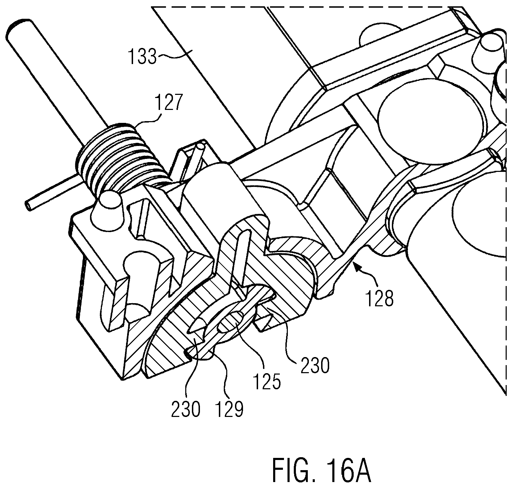

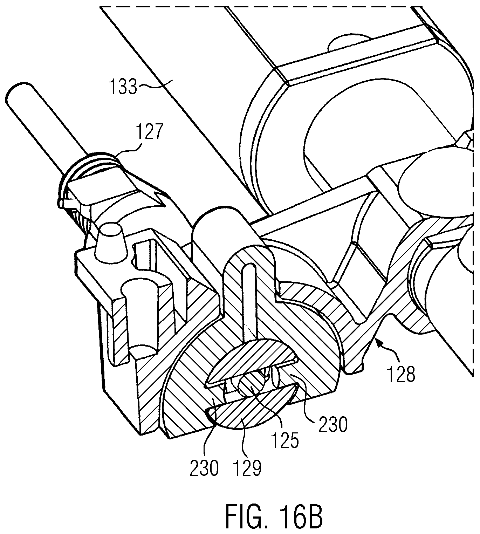

Der Vollständigkeit sei bemerkt, dass das Kurvengetriebe eigentlich zwei Nuten 130 und zwei Spurzapfen 230, die jeweils symmetrisch gegenüberliegend angeordnet sind, aufweist, um Querkräfte zu vermeiden. Dies kann man deutlich den Schnittansichten der Fig. 16A und 16B entnehmen.

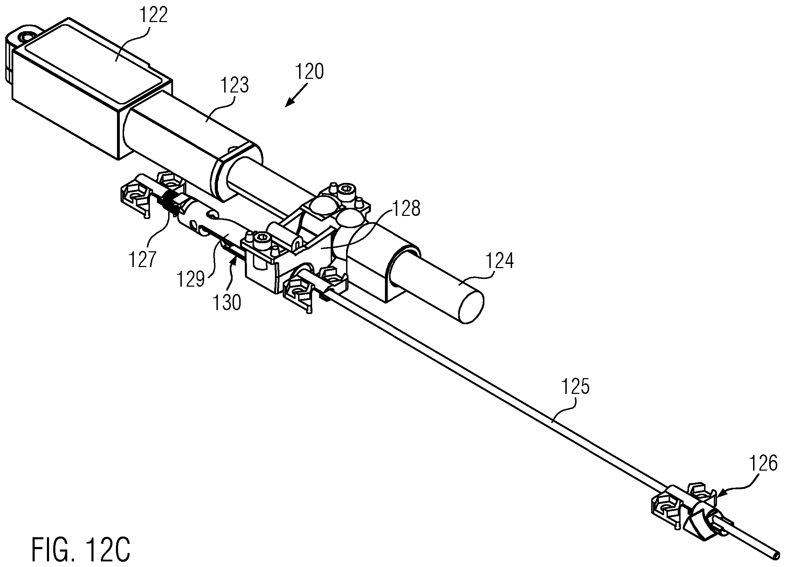

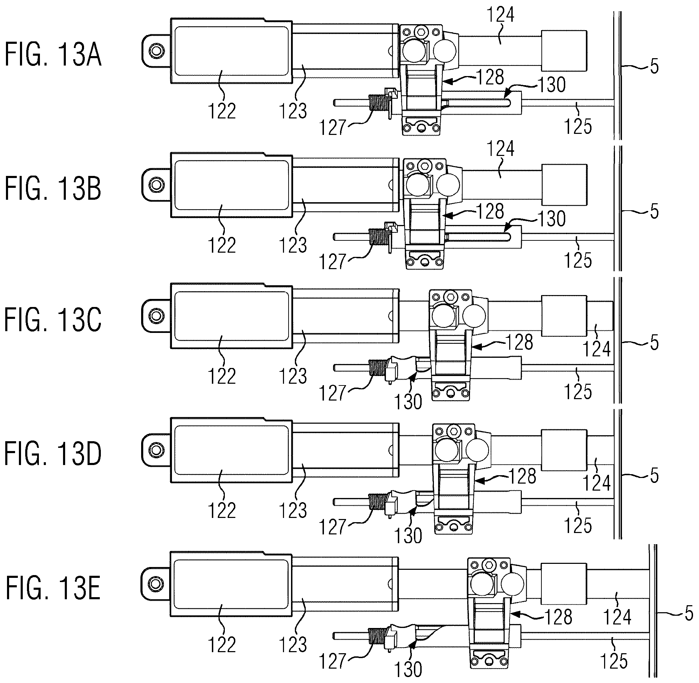

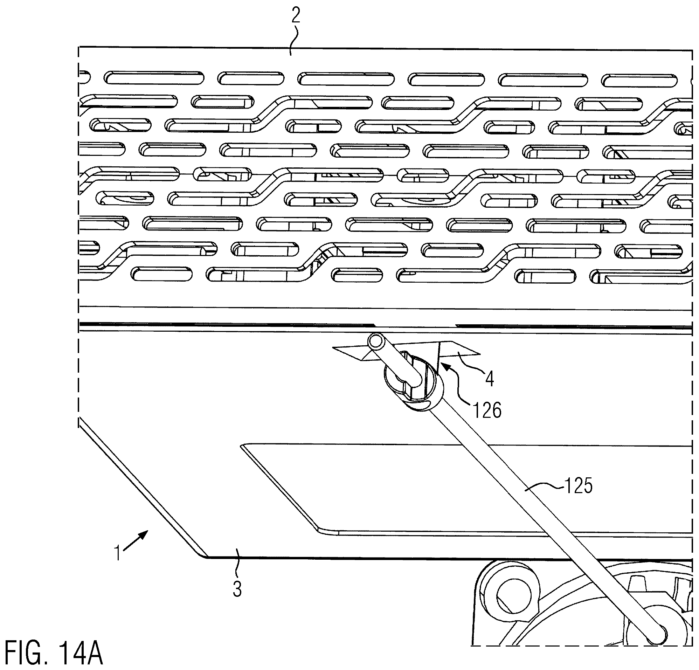

In Fig. 13A ist eine Betriebsstellung gezeigt, in welcher der Stempel 124 vollständig eingefahren ist (Hub = 0 mm), d.h. es ist die hintere Endposition dargestellt. Der Riegel 126 ist dabei in Blockadestellung, d.h. um 90 Grad aufgerichtet (vgl. Fig. 12A und Fig. 14A). In Fig. 13B ist eine Betriebsstellung gezeigt, in welcher der Stempel kaum sichtbar ausgefahren ist (Hub = 1 mm). Der Riegel 126 ist dabei weiterhin verriegelt, beginnt aber bereits seine Drehung um 90 Grad, d.h. seine Entriegelung. Der Spurzapfen 230 bewegt sich dabei in dem schraubenlinienförmig verlaufenden Abschnitt 131 der Nut 130. In Fig. 13C ist eine Betriebsstellung gezeigt, in welcher der Stempel noch weiter ausgefahren ist (Hub = 9 mm). Der Riegel 126 ist jetzt entriegelt, d.h. um 90 Grad gedreht (vgl. auch Fig. 12B und Fig. 14B). In Fig. 13D ist eine Betriebsstellung gezeigt, in welcher der Stempel 124 noch weiter ausgefahren ist (Hub = 10 mm). Der Stempel 124 ist jetzt gerade so weit ausgefahren, dass er die Baueinheit 1 im eingesetzten Zustand berührt und bei weiterem Ausfahren herausschieben kann. Der Riegel 126 bleibt entriegelt, und der Spurzapfen 230 bewegt sich ab jetzt in dem geraden Abschnitt 132 der Nut 130. In Fig. 13E ist eine Betriebsstellung gezeigt, in welcher der Stempel 124 vollständig ausgefahren ist (Hub = 21 mm), d.h. die Baueinheit 1 ist aus der Vorrichtung ausgeworfen (vgl. die linke Hälfte der Fig. 11D). Der Riegel 126 bleibt entriegelt (vgl. auch Fig. 12 C). Diese Betriebsstellung stellt auch eine Blockierposition dar, d.h. ein Anwender kann eine derart ausgeworfene Baueinheit 1 nicht einfach in die Vorrichtung zurückschieben. Beim Zurückfahren des Stempels 124 findet der umgekehrte Prozess statt, d.h. unmittelbar vor dem vollständigen Zurückfahren des Stempels 124 wird der Riegel 126 wieder verriegelt.

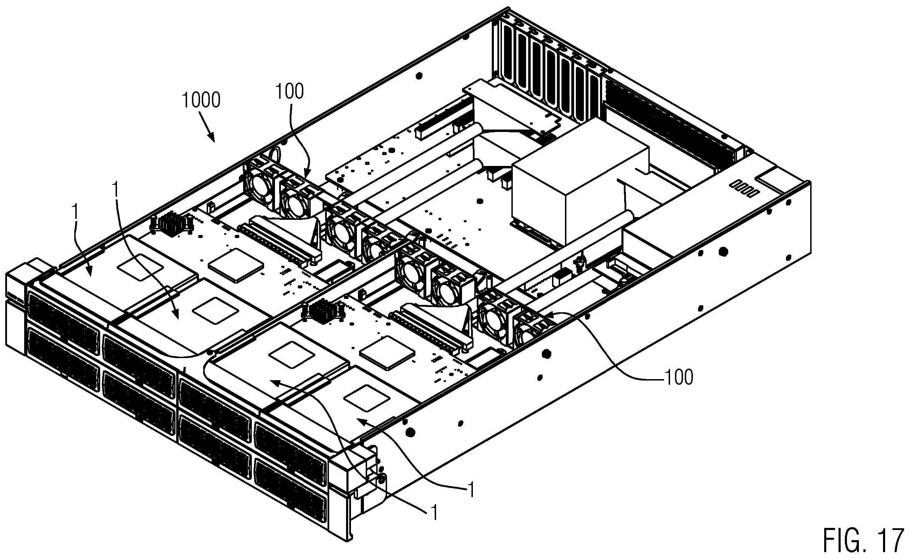

In Fig. 17 ist die Gesamtvorrichtung 1000 gezeigt, wobei im vorderen Teil der Vorrichtung 1000 vier Aufnahmeeinrichtungen 100 mit jeweils zwei erfindungsgemäßen Baueinheiten 1 aufgenommen sind. Im hinteren Teil der Vorrichtung befindet sich ein Motherboard mit einem Prozessor, welcher insbesondere das Schreiben und Lesen von Daten oder auch eine Datenprüfung oder -wiederherstellung steuert. Deshalb kann die Vorrichtung 1000 auch als RAID-Steuervorrichtung bzw. -Controller bezeichnet werden, welcher über 8 auswechselbare RAID-Laufwerke, jeweils durch 12 NVMe-SSD-Module 10 gebildet, verfügt. Die Aufnahmeeinrichtungen 100 sind über PCIe-Steckverbindungen mit dem Motherboard der Vorrichtung 1000 verbunden. Die Vorrichtung 1000 ist vorzugsweise ein 19 Zoll-Modul und ist über ein Netzwerk mit einem (nicht dargestellten) Bedienungsterminal verbunden, über welches ein Anwender Befehle eingeben kann oder Daten übermittelt werden können.

Die vorliegende Erfindung kann folgendermaßen zusammengefasst werden:
1. Baueinheit (1) zur Aufnahme von einer Vielzahl von Erweiterungskarten, wobei zum Halten von jeder der Erweiterungskarten eine jeweilige Trägereinrichtung (21, 22) vorgesehen ist.
2. Baueinheit (1) nach Punkt 1, dadurch gekennzeichnet, dass die Trägereinrichtung (21, 22) als Lichtleiter ausgebildet ist.
3. Baueinheit (1) nach Punkt 1 und/oder 2, dadurch gekennzeichnet, dass die Baueinheit (1) für jede der Vielzahl von Erweiterungskarten eine jeweilige Leuchtdiode (41, 42, 81, 82) aufweist, wobei die Leuchtdiode (41, 42, 81, 82) vorzugsweise zur Anzeige eines Betriebszustands der Erweiterungskarte vorgesehen ist.
4. Baueinheit (1) nach Punkt 3, dadurch gekennzeichnet, dass ein Ende der Trägereinrichtung (21, 22) im eingesteckten Zustand der Erweiterungskarte benachbart der Leuchtdiode (41, 42, 81, 82) angeordnet ist.
5. Baueinheit (1) nach Punkt 3 und/oder 4, dadurch gekennzeichnet, dass zur Einkopplung des Lichts der Leuchtdiode (41, 42, 81, 82) in die Trägereinrichtung (21, 22) die Trägereinrichtung (21, 22) an einem Bereich einer der Leuchtdiode (41, 42, 81, 82) abgewandten Seite mit einer abgeschrägten Fläche (21g, 21h, 22g, 22h) versehen ist.
6. Baueinheit (1) nach einem oder mehreren der vorhergehenden Punkte 3 bis 5, dadurch gekennzeichnet, dass zur Einkopplung des Lichts der Leuchtdiode (41, 42, 81, 82) in die Trägereinrichtung (21, 22) die Trägereinrichtung (21, 22) an einem Bereich der der Leuchtdiode (41, 42, 81, 82) zugewandten Seite mit einer planen Fläche (21i, 22i) versehen ist, welche senkrecht zu der Leuchtdiode (41, 42, 81, 82) angeordnet ist.
7. Baueinheit (1) nach Punkt 6, dadurch gekennzeichnet, dass, im Betrieb von der Leuchtdiode (41, 42, 81, 82) ausgesandtes Licht über die plane Fläche (21i, 22i) der Trägereinrichtung (21, 22) in diese eintritt und an der abgeschrägten Fläche (21g, 21h, 22g, 22h) mittels Totalreflexion in die Trägereinrichtung (21, 22), vorzugsweise in einer Längsrichtung der Trägereinrichtung (21, 22), reflektiert wird.
8. Baueinheit (1) nach einem oder mehreren der vorhergehenden Punkte, dadurch gekennzeichnet, dass die Trägereinrichtung (21, 22) eines oder mehrere der folgenden aufweist:
   - einen Haltegriff (21a, 22a);
   - einen als Rahmen ausgebildeten Grundkörper;
   - Materialaussparungen für auf der Erweiterungskarte angeordnete elektronische Bauteile;
   - ein erstes Paar von Führungsschienen (21c, 21d, 22c, 22d) zum Einsetzen der Erweiterungskarte, wobei die Führungsschienen des ersten Paars von Führungsschienen (21c, 21d, 22c, 22d) vorzugsweise an zwei Längsseiten der Trägereinrichtung (21, 22) angeordnet sind;
   - ein erstes Paar von Führungsschienen (21c, 21d, 22c, 22d) zum Einsetzen der Erweiterungskarte, wobei die Führungsschienen des ersten Paars von Führungsschienen (21c, 21d, 22c, 22d) ein unterschiedliches Querschnittsprofil aufweisen;
   - ein erstes Paar von Führungsschienen (21c, 21d, 22c, 22d) zum Einsetzen der Erweiterungskarte, wobei beide Führungsschienen des ersten Paars von Führungsschienen (21c, 21d, 22c, 22d) an einem Ende davon ein abgeflachtes Querschnittsprofil aufweisen, wobei vorzugsweise das Ende dem Haltegriff (21a, 22a) gegenüberliegt; und
   - einen Anschlag (21b, 22b), bis zu welchem die Erweiterungskarte in die ersten Führungsschienen eingesetzt werden kann.
9. Baueinheit (1) nach einem oder mehreren der vorhergehenden Punkte, dadurch gekennzeichnet, dass die Baueinheit (1) eines oder mehrere der folgenden aufweist:
   - ein im Wesentlichen quaderförmiges Gehäuse (3);
   - eine Vielzahl von zweiten Paaren (12a, 12b, 12c, 12d) von Führungsschienen zum jeweiligen Einsetzen der Vielzahl von Trägereinrichtungen, wobei eine Anzahl der Vielzahl der zweiten Paare (12a, 12b, 12c, 12d) von Führungsschienen einer Anzahl der Vielzahl der Trägereinrichtungen entspricht;
   - eine Vielzahl von zweiten Paaren (12a, 12b, 12c, 12d) von Führungsschienen zum jeweiligen Einsetzen der Vielzahl von Trägereinrichtungen, wobei ein Querschnittsprofil eines zweiten Paars (12a, 12b, 12c, 12d) von Führungsschienen eine zu einem Querschnittsprofil eines ersten Paars von Führungsschienen (21c, 21d, 22c, 22d) entsprechende Gegenprofilierung ist;
   - eine jeweilige Buchse (31, 32, 61, 62) zum Anschluss einer Erweiterungskarte;
   - zwei Buchsen (31, 32 ; 61, 62) zum Anschluss einer ersten und einer zweiten Erweiterungskarte, wobei beide Buchsen auf einer Platine angeordnet sind, und zwar in einer Einführrichtung hintereinander, wobei die in Einführrichtung hintere Buchse (31; 61) höher als die in Einführrichtung vordere Buchse (32; 62) derart ausgebildet ist, dass ein Einstecken der Erweiterungskarte in die hintere Buchse (31; 61) über die in Einführrichtung vordere Buchse (32; 62) hinweg ermöglicht wird;
   - eine Steuereinrichtung (90), insbesondere zum Ein- und Ausschalten der Stromversorgung für die Erweiterungskarte, wobei vorzugsweise die Steuereinrichtung (90) eine Authentifizierung eines Anwenders auf Richtigkeit überprüft, und bei positiver Authentifizierung die Stromversorgung für die Erweiterungskarte einschaltet;
   - eine Leuchtdiode (41, 42, 81, 82) zur Anzeige eines Betriebszustands der Erweiterungskarte;
   - eine abnehmbare Frontplatte (2) mit Lüftungsschlitzen, wobei vorzugsweise die Frontplatte (2) an deren Innenseite einen abgerundeten Bereich aufweist, mit welchen der Strömungsquerschnitt für in die Baueinheit (1) einströmende Luft graduell verkleinert wird;
   - eine Rückplatte (5) mit Lüftungsschlitzen;
   - eine auf der Unterseite der Baueinheit (1) ausgebildete Materialausnehmung (4), welche zur Verriegelung der Baueinheit (1) vorgesehen ist, und
   - einen NFC-Tag, mit welchem Informationen über die Baueinheit (1), vorzugsweise, in einem stromlosen Zustand der Baueinheit (1), ausgelesen werden können, wobei vorzugsweise die Baueinheit (1) eine Steuereinrichtung (90) zum Beschreiben des NFC-Tags aufweist.
10. Baueinheit (1) nach einem oder mehreren der vorhergehenden Punkte, dadurch gekennzeichnet, dass die Baueinheit (1) zwei Arten von Trägereinrichtungen (21, 22) aufweist, wobei eine Trägereinrichtung (21) der ersten Art länger als eine Trägereinrichtung (22) der zweiten Art ausgebildet ist.
11. Baueinheit (1) nach einem oder mehreren der vorhergehenden Punkte, dadurch gekennzeichnet, dass die Baueinheit (1) zwei Arten von Trägereinrichtungen aufweist, wobei ein Haltegriff der zwei Arten von Trägereinrichtungen an einer Schmalseite der Trägereinrichtungen ausgebildet sind, wobei der Haltegriff einer Trägereinrichtung der ersten Art an einem Ende der Schmalseite der Trägereinrichtung ausgebildet ist, und wobei der Haltegriff einer Trägereinrichtung der zweiten Art an einem gegenüberliegenden Ende der Schmalseite ausgebildet ist.
12. Baueinheit (1) nach einem oder mehreren der vorhergehenden Punkte, dadurch gekennzeichnet, dass die Baueinheit (1) zwei Arten von Trägereinrichtungen aufweist, wobei das Querschnittsprofil der Führungsschienen des ersten Paars von Führungsschienen (21c, 21d, 22c, 22d) der Trägereinrichtung der ersten Art verschieden zu dem Querschnittsprofil der Führungsschienen des ersten Paars von Führungsschienen (21c, 21d, 22c, 22d) der Trägereinrichtung der zweiten Art ausgebildet ist.
13. Baueinheit (1) nach einem oder mehreren der vorhergehenden Punkte, dadurch gekennzeichnet, dass die Baueinheit (1) wenigstens einen Schacht (11, 12, 13) aufweist, in welchem die zweiten Paare von Führungsschienen in einer Vertikalrichtung übereinander ausgebildet sind.
14. Baueinheit (1) nach einem oder mehreren der vorhergehenden Punkte, dadurch gekennzeichnet, dass die Baueinheit (1) zwei Buchsen (31, 32) zum Anschluss einer ersten und einer zweiten Erweiterungskarte aufweist, wobei beide Buchsen (31, 32) auf einer Seite einer Platine angeordnet sind, und zwar in einer Einführrichtung hintereinander, wobei die in Einführrichtung hintere Buchse (31) höher als die in Einführrichtung vordere Buchse (32) derart ausgebildet ist, dass ein Einstecken der Erweiterungskarte in die hintere Buchse (31) über die in Einführrichtung vordere Buchse (32) hinweg ermöglicht wird.
15. Baueinheit (1) nach Punkt 14, dadurch gekennzeichnet, dass die Baueinheit (1) zwei weitere Buchsen (61, 62) zum Anschluss einer dritten und vierten Erweiterungskarte aufweist, wobei die zwei weiteren Buchsen (61, 62) auf einer der Seite gegenüberliegenden Seite der Platine angeordnet sind, und zwar in der Einführrichtung hintereinander, wobei die in Einführrichtung hintere Buchse (61) der zwei weiteren Buchsen höher als die in Einführrichtung vordere Buchse (62) der zwei weiteren Buchsen derart ausgebildet ist, dass ein Einstecken der Erweiterungskarte in die hintere Buchse (61) über die in Einführrichtung vordere Buchse (62) hinweg ermöglicht wird.
16. Baueinheit (1) nach Punkt 15, dadurch gekennzeichnet, dass die Buchsen (31, 32) und die zwei weiteren Buchsen (61, 62) auf der Platine gegenüberliegend angeordnet sind.
17. Baueinheit (1) nach Punkt 13 und einem oder mehreren der vorhergehenden Punkte 14 bis 16, dadurch gekennzeichnet, dass die Platine mittig auf etwa der halben Höhe des Schachts und in Einführrichtung hinter dem Schacht angeordnet ist.
18. Baueinheit (1) nach Punkt 13 und einem oder mehreren der vorhergehenden Punkte 14 bis 17, dadurch gekennzeichnet, dass die zwei Buchsen (31, 32) und die zwei weiteren Buchsen (61, 62) derart auf der Platine angeordnet sind, dass die zwei Buchsen (31, 32) und die zwei weiteren Buchsen (61, 62) mittig in einer zu der Vertikalrichtung senkrechten horizontalen Richtung mittig hinter dem Schacht angeordnet sind.
19. Baueinheit (1) nach einem oder mehreren der vorhergehenden Punkte 14 bis 18, dadurch gekennzeichnet, dass die zwei Buchsen (31, 32) und die zwei weiteren Buchsen (61, 62) derart auf der Platine angeordnet sind, dass die in die zwei Buchsen (31, 32) und die zwei weiteren Buchsen (61, 62) einzusteckenden vier Erweiterungskarten im eingesteckten Zustand in einem vorbestimmten Abstand äquidistant voneinander beabstandet sind.
20. Baueinheit (1) nach Punkt 19, dadurch gekennzeichnet, dass eine obere der vier Erweiterungskarten von der oberen Wand der Baueinheit (1) und ein untere der vier Erweiterungskarten von der unteren Wand um den vorbestimmten Abstand beabstandet ist.
21. Baueinheit (1) nach einem oder mehreren der vorhergehenden Punkte, dadurch gekennzeichnet, dass die Erweiterungskarten gemäß dem M.2 Standard ausgebildet sind.
22. Baueinheit (1) nach einem oder mehreren der vorhergehenden Punkte, dadurch gekennzeichnet, dass die Erweiterungskarten über das PCIe-Protokoll kommunizieren.
23. Baueinheit (1) nach einem oder mehreren der vorhergehenden Punkte, dadurch gekennzeichnet, dass die Erweiterungskarten NVMe-SSD-Module (10) sind.
24. Aufnahmeeinrichtung (100) für wenigstens eine Baueinheit (1) nach einem oder mehreren der vorhergehenden Punkte, wobei die Aufnahmeeinrichtung (100) wenigstens eine Aufnahmeöffnung für die wenigstens eine Baueinheit (1) aufweist, wobei die Aufnahmeeinrichtung (100) wenigstens eine Auswurfeinrichtung für die wenigstens eine Baueinheit (1) aufweist, wobei die Auswurfeinrichtung einen Linearmotor (122) aufweist, an welchem ein Stempel angebracht ist, der die Baueinheit (1) durch eine Bewegung des Stempels beginnend ab einer ersten Hubposition des Linearmotors (122), welche einem Kontakt des Stempels mit der Baueinheit (1) entspricht, bis zu einer zweiten Hubposition des Linearmotors (122), welche einer Auswurfposition der Baueinheit (1) entspricht, auswirft.
25. Aufnahmeeinrichtung (100) nach Punkt 24, dadurch gekennzeichnet, dass der Stempel in der zweiten Hubposition als Blockiereinrichtung für die Baueinheit (1) wirkt.
26. Aufnahmeeinrichtung (100) nach Punkt 24 und/oder 25, dadurch gekennzeichnet, dass die Aufnahmeeinrichtung (100) ferner eine Verriegelungsstange aufweist, wobei der Linearmotor (122) über eine Getriebeeinrichtung mit der Verriegelungsstange verbunden ist, wobei die Getriebeeinrichtung derart ausgebildet ist, dass durch eine Hinbewegung des Linearmotors (122) die Verriegelungsstange um etwa 90 Grad um deren Mittelachse gedreht wird, und wobei durch eine Rückbewegung des Linearmotors (122) die Verriegelungsstange um etwa 90 Grad um deren Mittelachse zurückgedreht wird.
27. Aufnahmeeinrichtung (100) nach einem Punkt 26, dadurch gekennzeichnet, dass die Drehung der Verriegelungsstange in einem Hubbereich des Linearmotors (122) erfolgt, der zwischen einer Hubposition des Linearmotors (122) bei eingefahrenem Stempel und der ersten Hubposition ist.
28. Aufnahmeeinrichtung (100) nach einem oder mehreren der vorhergehenden Punkte 26 bis 27, dadurch gekennzeichnet, dass die Aufnahmeeinrichtung (100) ferner einen Schlüssel aufweist, welcher auf die Verriegelungsstange aufsteckbar ist, und mit dem die Verriegelungsstange zur Entriegelung manuell gedreht werden kann.
29. Aufnahmeeinrichtung (100) nach einem oder mehreren der vorhergehenden Punkte 26 bis 28, dadurch gekennzeichnet, dass die Verriegelungsstange einen Riegel aufweist, welche in eine entsprechende Ausnehmung (4) der Baueinheit (1) eingreift, um die Baueinheit (1) in der Aufnahmeeinrichtung (100) zu verriegeln, und der Riegel die Baueinheit (1) durch die Drehung der Verriegelungsstange bei der Hinbewegung des Linearmotors (122) um etwa 90 Grad entriegelt und durch die Drehung der Verriegelungsstange bei der Rückbewegung des Linearmotors (122) um etwa 90 Grad verriegelt.
30. Aufnahmeeinrichtung (100) nach Punkt 29, dadurch gekennzeichnet, dass der Riegel an einem Außenumfang der Verriegelungsstange angeordnet und vorzugsweise im wesentlichen senkrecht von dieser absteht.
31. Aufnahmeeinrichtung (100) nach einem oder mehreren der vorhergehenden Punkte 26 bis 30, dadurch gekennzeichnet, dass die Getriebeeinrichtung eine Brücke zu Übertragung der Linearbewegung von dem Stempel auf die Verriegelungsstange aufweist, wobei die Getriebeeinrichtung ferner eine Torsionsfeder aufweist, wobei an der Verriegelungsstange eine umfangsmäßig angeordnete Nut ausgebildet, in welcher ein Spurzapfen geführt ist, wobei der Spurzapfen durch die Torsionsfeder gegen eine Wand der Nut vorgespannt ist, und wobei die Nut einen im wesentlichen Geraden Abschnitt und einen im wesentlichen schraubenlinienförmig verlaufenden Abschnitt aufweist.
32. Aufnahmeeinrichtung (100) nach Punkt 31, dadurch gekennzeichnet, dass der Spurzapfen in einem ersten Hubbereich des Linearmotors (122), der zwischen einer Hubposition des Linearmotors (122) bei eingefahrenem Stempel und der ersten Hubposition liegt, in dem schraubenlinienförmig verlaufenden Abschnitt geführt ist, und in einem zweiten Hubbereich des Linearmotors (122), der zwischen der ersten und der zweiten Hubposition liegt, in dem geraden Abschnitt geführt ist.
33. Aufnahmeeinrichtung (100) nach einem oder mehreren der vorhergehenden Punkte 24 bis 32, dadurch gekennzeichnet, dass die Aufnahmeeinrichtung (100) an einem der wenigstens einen Aufnahmeöffnung gegenüberliegenden Ende der Aufnahmeeinrichtung (100) wenigstens einen Lüfter aufweist.
34. Computereinrichtung (1000) mit wenigstens einer Aufnahmeeinrichtung (100) nach einem oder mehreren der Punkte 24 bis 33 und wenigstens einer Baueinheit (1) nach einem oder mehreren der Punkte 1 bis 23, wobei wenigstens eine Baueinheit (1) ein Speicherverbund-Modul, wie z.B. ein RAID-Modul, ist und wobei die Computereinrichtung (1000) eine Steuereinrichtung (90) für das wenigstens ein Speicherverbund-Modul aufweist.
35. Verfahren zur 2-Faktor-Authentifizierung eines Schreib-/Lesezugriffs auf ein RAID-System, insbesondere unter Verwendung einer Baueinheit (1) nach einem der vorhergehenden Punkte 1 bis 23, wobei der erste Faktor die Berechtigung zum Schreiben/Lesen ist und der zweite Faktor die Berechtigung zum Einschalten einer Stromversorgung für die Speichermodule ist.
36. Verfahren zur Realisierung einer Fähigkeit eines Einsteckens eines NVMe-SSD-Moduls (10) im laufenden Betrieb, insbesondere unter Verwendung einer Baueinheit (1) nach einem der vorhergehenden Punkte 1 bis 23, und insbesondere auch in Verbindung mit dem Verfahren nach Punkt 35, gekennzeichnet durch folgende Schritte:
   (a) Erkennen eines eingesetzten NVMe-SSD-Moduls (10) an einer an einem Massen-Pin davon anliegenden Spannung;
   (b) Einschalten der Versorgungsspannung und Anlegen derselben an den Versorgungsspannungs-Pin des NVMe-SSD-Moduls (10) nach einer ersten vorbestimmten Zeitperiode nach Schritt (a); und
   (c) Ansteuern des PERST-Pins des NVMe-SSD-Moduls (10) mit einem Rücksetzsignal nach einer zweiten vorbestimmten Zeitperiode nach Schritt (b).
37. Verfahren nach Punkt 36, dadurch gekennzeichnet, dass beim Einstecken eines NVMe-SSD-Moduls (10) ein Masse-Pin des NVMe-SSD-Moduls (10) nicht mit einem Masseanschluss der Baueinheit (1) verbunden wird.
38. Verfahren nach Punkt 36 und/oder 37, dadurch gekennzeichnet, dass die erste und die zweite vorbestimmte Zeitperiode ungefähr 100 ms sind.

Die Erfindung wurde vorstehend anhand von bevorzugten Ausführungsformen derselben näher erläutert. Für einen Fachmann ist es jedoch offensichtlich, dass unterschiedliche Abwandlungen und Modifikationen gemacht werden können, ohne von dem der Erfindung zugrundeliegenden Gedanken abzuweichen.

### Bezugszeichenliste:

- 1: Baueinheit
- 2: Frontplatte
- 3: Gehäuse
- 4: (Material-)Ausnehmung
- 5: Rückplatte
- 6: Längsschlitze
- 7: Öffnungen
- 8: Längsschlitze
- 9: Öffnungen
- 10: NVMe-SSD-Modul
- 10a: Anschlüsse
- 11, 12, 13: Schacht
- 12a, 12b, 12c 12d: Paar von Führungsschienen
- 12a', 12b', 12c' 12d': linke Führungsschiene der Baueinheit
- 12a", 12b", 12c" 12d": rechte Führungsschiene der Baueinheit
- 14, 15: Trennwände
- 21: Trägereinrichtung bzw. Halter der ersten Art
- 22: Trägereinrichtung bzw. Halter der zweiten Art
- 21a: Haltegriff bzw. Handgriff
- 21b: Anschlag
- 21c: linke Führungsschiene der Trägereinrichtung
- 21d: rechte Führungsschiene der Trägereinrichtung
- 21e, 21f: abgeflachter Bereich
- 21g, 21h: abgeschrägte Fläche
- 21i: plane bzw. ebene Fläche
- 21k, 21l, 21m, 21n: Nocken
- 22a: Handgriff bzw. Haltegriff
- 22b: Anschlag
- 22c: linke Führungsschiene der Trägereinrichtung
- 22d: rechte Führungsschiene der Trägereinrichtung
- 22e, 22f: abgeflachter Bereich
- 22g, 22h: abgeschrägte Fläche
- 22i: plane bzw. ebene Fläche
- 22k, 22l, 22m, 22n: Nocken
- 25: Abschnitt bzw. Bereich
- 30: Platine
- 31, 32: Buchsen
- 41, 42: Leuchtdioden
- 61, 62: Buchsen
- 81, 82: Leuchtdioden
- 90: Mikroprozessor bzw. Steuereinrichtung
- 91: Schalter
- 100: Aufnahmeeinrichtung
- 101, 102, 103, 104: Lüfter
- 110: Busplatine bzw. Rückverdrahtungseinheit
- 120: Auswurfmechanismus
- 121: Elektronikschaltung
- 122: Linearmotor
- 123: Getriebe
- 124: Stempel
- 125: Verriegelungsstange
- 126: Riegel
- 127: Torsionsfeder
- 128: Brücke
- 129: Hülse
- 130: Nut
- 131: erster Bereich bzw. Abschnitt
- 132: zweiter Bereich bzw. Abschnitt
- 230: Spurzapfen
- 1000: Computereinrichtung
- VCC: Versorgungsspannung
- GND: Masse(nanschluss)

## Patentansprüche

1. Aufnahmeeinrichtung (100) für wenigstens eine Baueinheit (1) nach einem oder mehreren der vorhergehenden Ansprüche, wobei die Aufnahmeeinrichtung (100) wenigstens eine Aufnahmeöffnung für die wenigstens eine Baueinheit (1) aufweist, wobei die Aufnahmeeinrichtung (100) wenigstens eine Auswurfeinrichtung für die wenigstens eine Baueinheit (1) aufweist, wobei die Auswurfeinrichtung einen Linearmotor (122) aufweist, an welchem ein Stempel angebracht ist, der die Baueinheit (1) durch eine Bewegung des Stempels beginnend ab einer ersten Hubposition des Linearmotors (122), welche einem Kontakt des Stempels mit der Baueinheit (1) entspricht, bis zu einer zweiten Hubposition des Linearmotors (122), welche einer Auswurfposition der Baueinheit (1) entspricht, auswirft.

2. Aufnahmeeinrichtung (100) nach Anspruch 1, **dadurch gekennzeichnet, dass** der Stempel in der zweiten Hubposition als Blockiereinrichtung für die Baueinheit (1) wirkt.

3. Aufnahmeeinrichtung (100) nach Anspruch 1 und/oder 2, **dadurch gekennzeichnet, dass** die Aufnahmeeinrichtung (100) ferner eine Verriegelungsstange aufweist, wobei der Linearmotor (122) über eine Getriebeeinrichtung mit der Verriegelungsstange verbunden ist, wobei die Getriebeeinrichtung derart ausgebildet ist, dass durch eine Hinbewegung des Linearmotors (122) die Verriegelungsstange um etwa 90 Grad um deren Mittelachse gedreht wird, und wobei durch eine Rückbewegung des Linearmotors (122) die Verriegelungsstange um etwa 90 Grad um deren Mittelachse zurückgedreht wird.

4. Aufnahmeeinrichtung (100) nach einem Anspruch 3, **dadurch gekennzeichnet, dass** die Drehung der Verriegelungsstange in einem Hubbereich des Linearmotors (122) erfolgt, der zwischen einer Hubposition des Linearmotors (122) bei eingefahrenem Stempel und der ersten Hubposition ist.

5. Aufnahmeeinrichtung (100) nach einem oder mehreren der vorhergehenden Ansprüche 3 bis 4, **dadurch gekennzeichnet, dass** die Aufnahmeeinrichtung (100) ferner einen Schlüssel aufweist, welcher auf die Verriegelungsstange aufsteckbar ist, und mit dem die Verriegelungsstange zur Entriegelung manuell gedreht werden kann.

6. Aufnahmeeinrichtung (100) nach einem oder mehreren der vorhergehenden Ansprüche 3 bis 5, **dadurch gekennzeichnet, dass** die Verriegelungsstange einen Riegel aufweist, welche in eine entsprechende Ausnehmung (4) der Baueinheit (1) eingreift, um die Baueinheit (1) in der Aufnahmeeinrichtung (100) zu verriegeln, und der Riegel die Baueinheit (1) durch die Drehung der Verriegelungsstange bei der Hinbewegung des Linearmotors (122) um etwa 90 Grad entriegelt und durch die Drehung der Verriegelungsstange bei der Rückbewegung des Linearmotors (122) um etwa 90 Grad verriegelt.

7. Aufnahmeeinrichtung (100) nach Anspruch 6, **dadurch gekennzeichnet, dass** der Riegel an einem Außenumfang der Verriegelungsstange angeordnet und vorzugsweise im wesentlichen senkrecht von dieser absteht.

8. Aufnahmeeinrichtung (100) nach einem oder mehreren der vorhergehenden Ansprüche 3 bis 7, **dadurch gekennzeichnet, dass** die Getriebeeinrichtung eine Brücke zu Übertragung der Linearbewegung von dem Stempel auf die Verriegelungsstange aufweist, wobei die Getriebeeinrichtung ferner eine Torsionsfeder aufweist, wobei an der Verriegelungsstange eine umfangsmäßig angeordnete Nut ausgebildet, in welcher ein Spurzapfen geführt ist, wobei der Spurzapfen durch die Torsionsfeder gegen eine Wand der Nut vorgespannt ist, und wobei die Nut einen im wesentlichen Geraden Abschnitt und einen im wesentlichen schraubenlinienförmig verlaufenden Abschnitt aufweist.

9. Aufnahmeeinrichtung (100) nach Anspruch 8, **dadurch gekennzeichnet, dass** der Spurzapfen in einem ersten Hubbereich des Linearmotors (122), der zwischen einer Hubposition des Linearmotors (122) bei eingefahrenem Stempel und der ersten Hubposition liegt, in dem schraubenlinienförmig verlaufenden Abschnitt geführt ist, und in einem zweiten Hubbereich des Linearmotors (122), der zwischen der ersten und der zweiten Hubposition liegt, in dem geraden Abschnitt geführt ist.

10. Aufnahmeeinrichtung (100) nach einem oder mehreren der vorhergehenden Ansprüche 1 bis 9, **dadurch gekennzeichnet, dass** die Aufnahmeeinrichtung (100) an einem der wenigstens einen Aufnahmeöffnung gegenüberliegenden Ende der Aufnahmeeinrichtung (100) wenigstens einen Lüfter aufweist.

11. Computereinrichtung (1000) mit wenigstens einer Aufnahmeeinrichtung (100) nach einem oder mehreren der Ansprüche 1 bis 10 und wenigstens einer Baueinheit (1) zur Aufnahme von einer Vielzahl von Erweiterungskarten, wobei zum Halten von jeder der Erweiterungskarten eine jeweilige Trägereinrichtung (21, 22) vorgesehen ist, wobei die wenigstens eine Baueinheit (1) ein Speicherverbund-Modul ist und wobei die Computereinrichtung (1000) eine Steuereinrichtung (90) für das wenigstens ein Speicherverbund-Modul aufweist.

12. Computereinrichtung (1000) nach Anspruch 11, **dadurch gekennzeichnet, dass** das Speicherverbund-Modul ein RAID-Modul ist.

13. Computereinrichtung (1000) nach Anspruch 11 und/oder 12, **dadurch gekennzeichnet, dass** die Trägereinrichtung (21, 22) als Lichtleiter ausgebildet ist.

14. Computereinrichtung (1000) nach einem oder mehreren der Ansprüche 11 bis 13, **dadurch gekennzeichnet, dass** die Erweiterungskarten gemäß dem M.2 Standard ausgebildet sind.

15. Computereinrichtung (1000) nach einem oder mehreren der Ansprüche 11 bis 14, **dadurch gekennzeichnet, dass** die Erweiterungskarten NVMe-SSD-Module (10) sind.
